# EUROPEAN PATENT SPECIFICATION

(11) **EP 0 633 729 B1**
(45) Date of publication and mention of the grant of the patent: **14.05.1997**
(21) Application number: 93907193.2
(22) Date of filing: 02.03.1993
(51) Int. Cl.: A23G 3/30

(54) **A WAX-FREE CHEWING GUM WITH INITIAL SOFT BITE**
WACHSFREIER KAUGUMMI MIT AM ANFANG WEICHEM BISS
GOMME A MACHER EXEMPTE DE CIRE, TENDRE DES LE DEPART

(30) Priority: 03.03.1992 WO PCT/US92/01686; 30.06.1992 US 906921; 06.11.1992 WO PCT/US92/09615; 29.12.1992 US 996914; 29.12.1992 US 997876; 30.12.1992 US 997732; 30.12.1992 WO PCT/US92/11317
(43) Date of publication of application: 18.01.1995
(73) Proprietor: WM. WRIGLEY JR. COMPANY, Chicago Illinois 60611 (US)
(72) Inventor: SYNOSKY, Steven, P., Greenbrook, NJ 08812 (US); REED, Michael, A., Merrillville, IN 46410 (US); LAUGHLIN, Kenneth, W., Hinsdale, IL 60521 (US)
(74) Representative: Hardisty, David Robert
(86) International application number: US9301941
(87) International publication number: WO9317578

(56) References cited:
- GB-A- 2 241 957
- US-A- 3 984 574
- US-A- 4 357 355
- US-A- 4 387 108
- US-A- 4 737 366
- US-A- 5 023 093

## Description

This application is a continuation-in-part of International Application No. PCT/US92/11317, filed on December 30, 1992, which in turn is a continuation-in-part of International Application No. PCT/US92/09615, filed on November 6, 1992, which in turn is a continuation-in-part of PCT/US92/01686, filed on March 3, 1992.

The present invention relates to an improved chewing gum of the type which does not contain wax, and to certain wax-free chewing gum products having an initial soft bite as measured by a Taber Stiffness Test (Taber Units) and by Instron yield data. The gum also has excellent tempering times, a good surface toughness and can be produced more quickly than comparable wax containing gums.

U.S. Patent 3,984,574, issued to Comollo, discloses an abhesive chewing gum base in which the non-tack properties were achieved by eliminating conventional chewing gum base ingredients which were found to contribute to chewing gum tackiness, and by substituting non-tacky ingredients in place of the conventional ingredients. Specifically, it was discovered that three classes of materials account for conventional chewing gum tackiness. These materials are elastomers, resins, and waxes.

Comollo eliminated natural and some synthetic elastomers from chewing gum base, and substituted in their place one or more non-tacky synthetic elastomers such as polyisobutylene, polyisoprene, isobutylene-isoprene copolymer and butadiene-styrene copolymer. Comollo also eliminated the tack-producing natural resins and modified natural resins and used instead relatively high amounts of hydrogenated or partially hydrogenated vegetable oils or animal fats. Finally, Comollo completely excluded waxes from the gum base, but included polyvinylacetate, fatty acids, and mono and diglycerides of fatty acids. Comollo provided no information relating to the relationship of initial soft bite and toughness.

In US-A-5023093, there is disclosed a chewing gum base with reduced calorie content. The central components of that gum base are 10-25% polyvinyl acetate having a medium molecular weight of about 35,000 to 55,000, 4.5% to about 10% acetylated monoglyceride.

In GB-2241957 there is described a method by which the chicle or jelutong content and water are separated from a tree sap containing said components and other natural resins such as rubber hydrocarbons. Examples of gum bases incorporating said components are given which include microcrystal and wax.

The present invention is directed to improvements in a wax-free chewing gum base (i.e. a chewing gum base which is free of hydrocarbon-containing waxes) and improved wax-free chewing gums prepared therefrom. The wax-free gum base of the invention includes quantities and mixtures of selected synthetic elastomers, selected and preferred elastomer plasticizers, filler, and selected and preferred softeners. However, unlike Comollo, the gum base of the invention is not limited to use in a non-tack chewing gum and may, therefore, contain optional quantities of natural elastomer and/or natural resins. The gum base of the invention may also contain optional quantities of minor ingredients such as color and antioxidant. The gum base of the invention most preferably contains a preferred blend of at least two synthetic elastomers, including certain vinyl polymers, particularly polyvinylacetate.

The optional use of natural elastomers in the gum base compliments certain chewing gum flavors, such as mint oil, by rounding out the otherwise harsh or grassy notes in the flavor. The presence of natural elastomers and natural resins in the gum base also contributes to improved chewing gum texture and flavor retention.

There is currently a need or desire in the chewing gum industry for gum bases which are devoid or substantially free of hydrocarbon-containing waxes and which contain desired quantities of both synthetic and natural elastomers, natural resins, or both.

With the foregoing in mind, it is a feature and advantage of the invention to provide a substantially wax-free chewing gum base.

It is also a feature and advantage of the invention to provide a suitably soft gum base in which wax is not needed to soften the gum base.

It is also a feature and advantage of the invention to provide a suitably soft wax-free gum base which gum base comprises multiple blended synthetic elastomers, selected elastomer plasticizers and selected softeners, and which gum base may be blended with selected sweeteners, bulking agents and binders, as well as certain water soluble or water dispersible softeners to provide a chewing gum having soft initial bite.

It is also a feature and advantage of the invention to improve the compatibility of gum base and other chewing gum ingredients during the blending and mixing processes.

It is also a feature and advantage of the invention to provide improved chewing gums having initial soft bite and which contain the wax-free chewing gum bases of the invention.

It is also a feature and advantage of the invention to provide chewing gum products having desirable properties such as flavor quality and strength, flavor and sweetness retention, breath freshening, dental and oral health properties and good shelf stability.

It is also a feature and advantage of the invention to provide a wax-free chewing gum with soft initial bite, faster wrapping time and more efficient processing time, which chewing gum is not only wax-free, but is also preferably low in moisture and contains certain selected blends of synthetic elastomers, oil and water soluble/dispersible softeners, and certain selected binders, and which gum has certain physical characteristics which permit soft initial bite and toughness permitting rapid set-up and more efficient production.

The foregoing and other features and advantages will become further apparent from the following detailed description of the presently preferred embodiments, when read in conjunction with the accompanying examples. It should be understood that the detailed description and examples are illustrative rather than limitative, the scope of the present invention being defined by the appended claims and equivalents thereof.

According to the present invention there is provided a chewing gum free of mineral hydrocarbon wax which also contains no more than 5% natural wax having an initial soft bite comprising from 5 to 35 wt% gum base which gum base comprises: from 20 to 60 wt% of a blend of at least two synthetic elastomers; from 0 to 30 wt% of at least one natural elastomer; from 5 to 55 wt% of at least one elastomer plasticizer; from 4 to 40 wt% filler; and from 5 to 40 wt% of at least one softener at least one of which shall be hydrogenated or partialy hydrogenated vegetable oil or a mixture of hydrogenated and partialy hydrogenated vegetable oils, said chewing gum also having a Taber Stiffness at least 5 percent less than the Taber Stiffness of a comparable wax containing gum.

In accordance with the invention, a wax-free chewing gum base is provided for use in either non-tack or conventional chewing gum, which may be either bubble gum or regular chewing gum. The chewing gum base of the invention contains from 20 to 60 weight percent of a blend of synthetic elastomers, from 0 to 30 weight percent natural elastomer, from 5 to 55 weight percent elastomer plasticizer, from 4 to 40 weight percent of filler, from 5 to 40 weight percent softener, and optional minor amounts (about one percent or less) of miscellaneous ingredients such as colorants, antioxidants, etc.

The synthetic elastomers may include, but are not limited to, polyisobutylene with GPC molecular weight of from 10,000 to 95,000, isobutylene-isoprene copolymer (butyl elastomer) having a GPC molecular weight of from 10,000 to 95,000 and an isobutylene to isoprene. weight ratio of from 0.2:99.8 to 99.8 to 0.2, styrene-butadiene copolymers having styrene-butadiene weight ratios of from 1:3 to 3:1 and a GPC molecular weight of from 5,000 to 80,000, polyvinylacetate having GPC molecular weight of from 2,000 to 90,000, polyisoprene having a GPC molecular weight of from 10,000 to 90,000, polyethylene, vinyl acetate-vinyl laurate copolymer having vinyl laurate content of about 5 to about 50 percent by weight of the copolymer and a GPC molecular weight of from 5,000 to 80,000, and combinations thereof. Polyvinylacetate, polyethylene, and the vinyl laurate copolymers are sometimes also referred to as vinyl polymers.

Preferred ranges are, for polyisobutylene, 50,000 to 80,000 GPC molecular weight, for styrene-butadiene, 1:1 to 1:3 bound styrene-butadiene, for polyvinylacetate, 10,000 to 65,000 GPC molecular weight with the higher molecular weight polyvinylacetates typically used in bubble gum base, and for the vinyl acetate-vinyl laurate copolymers, a vinyl laurate content of 10-45 percent.

The most preferred synthetic elastomers are the styrene-butadiene (SBR) copolymers, the polyisobutylenes (PIB), and the isoprene-isobutylene copolymers (butyl rubber or butyl elastomer). The preferred use of these synthetic elastomers includes a blend of at least two and preferably all three of these elastomers, preferably with polyvinylacetate. In terms of elastomer content, the improved wax-free gum bases have from 20 to 60 weight percent synthetic elastomers, which synthetic elastomers are SBR, PIB, and butyl elastomer blends, which blends most preferably contain from 0 to 20 percent SBR, from 20 to 80 percent PIB, and from 0 to 40 percent butyl rubber. (All based on total synthetic elastomer percent.)

These synthetic elastomer blends may also be blended with certain vinyl polymers such as polyvinylacetate, polyethylene, vinyl acetate-vinyl laurate copolymers, and the like. Generally, in such an elastomer/vinyl polymer blend, the total synthetic elastomer content ranges from 20 to 80 weight percent of the blend and the vinyl polymer content ranges from 80 to 20 weight percent of the blend. Preferably this elastomer/vinyl polymer blend contains from 40 to 60 weight percent synthetic elastomers and from 60 to 40 weight percent vinyl polymers, preferably as polyvinylacetate.

Natural elastomers may also be optionally present and include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, chiquibul, crown gum, pendare, venezuelau chicle, leche de vaca, niger gutta, tunu, chilte and combinations thereof. The preferred natural elastomers are jelutong, chicle, sorva and massaranduba balata. The preferred synthetic elastomers and natural elastomers and the preferred synthetic and natural elastomer concentrations vary depending on whether the chewing gum in which the base is used is abhesive or conventional, bubble gum or regular gum, as discussed below.

Elastomer plasticizers may include, but are not limited to, natural rosin esters such as glycerol esters of partially hydrogenated rosin, glycerol esters of polymerized rosin, glycerol esters of partially dimerized rosin, glycerol esters of rosin, glycerol ester of tall oil rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; natural terpene resin; and any suitable combinations of the foregoing. The preferred elastomer plasticizers will also vary depending on the specific application, and on the type of elastomer which is used. For example, use of terpene resin to wholly or partially replace ester gums will cause the gum base to be less tacky.

The term "wax-free" as used herein refers to the exclusion of waxes which contain mineral hydrocarbons. Natural waxes such as carnauba wax, bees wax, rice bran wax, and candellila wax do not contain mineral hydrocarbons and are therefor acceptable for use in the chewing gum base and chewing gums prepared therefrom. However, the preferred chewing gums, and the bases of this invention would normally contain less than 5 weight percent natural wax in the gum base, and most preferably are free of natural waxes.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

Softeners/emulsifiers may include tallow, hydrogenated tallow, hydrogenated and partially hydrogenated vegetable oils, cocoa butter, glycerol monostearate, glycerol acetate, glycerol diacetate (diacetin) and glycerol triacetate (triacetin), lecithin, mono-, di- and triglycerides, acetylated monoglycerides, fatty acids (e.g. stearic, palmitic, oleic and linoleic acids), lanolin, and combinations thereof. Hydrogenated or partially hydrogenated vegetable oils are generally preferred, either alone or in combination with other softeners such as lecithin and/or glycerol monostearate.

Colorants and whiteners may include FD&C-type dyes and lakes, fruit and vegetable extracts, titanium dioxide, cocoa powder and combinations thereof.

The wax-free gum base of the invention may also contain optional ingredients such as antioxidants. Synthetic antioxidants may include butylated hydroxy-anisole (BHA), butylated hydroxy-toluene (BHT) and tertiary, butyl hydroquinone (TBHQ). Natural antioxidants may include tocopherols, mixed tocopherols, eugenol, gum guaiac, thymol, carvacrol, and spice extracts of thyme, oregano, rosemary, nutmeg, ginger and mixtures thereof. The usage level will depend on the antioxidant selected but will generally be at or above the level of maximum effectiveness. Generally speaking, the higher the content of unsaturated vegetable oils, the greater the concentration of anti-oxidant is required in wax-free gum bases and chewing gums of this invention.

When the wax-free gum base of the invention is to be used in a regular (non-bubble) gum which has at least some abhesive (reduced tack) characteristics, the base should contain from 10 to 40 weight percent synthetic elastomer, from 15 to 30 weight percent elastomer plasticizer, from 5 to 30 weight percent filler, from 15 to 35 weight percent softener, from 0 to 1 weight percent colorant and from 0 to 0.1 weight percent antioxidant. Specific embodiments of some wax-free gum bases are provided in Examples 1-30 below.

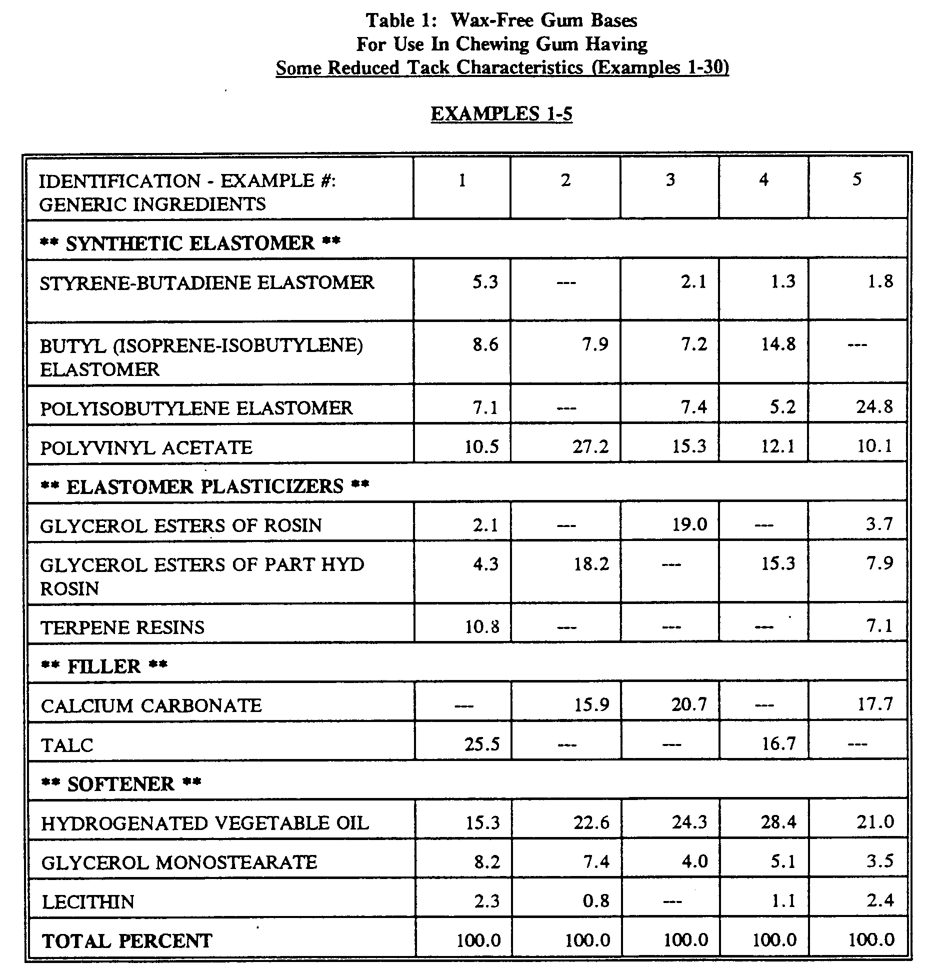

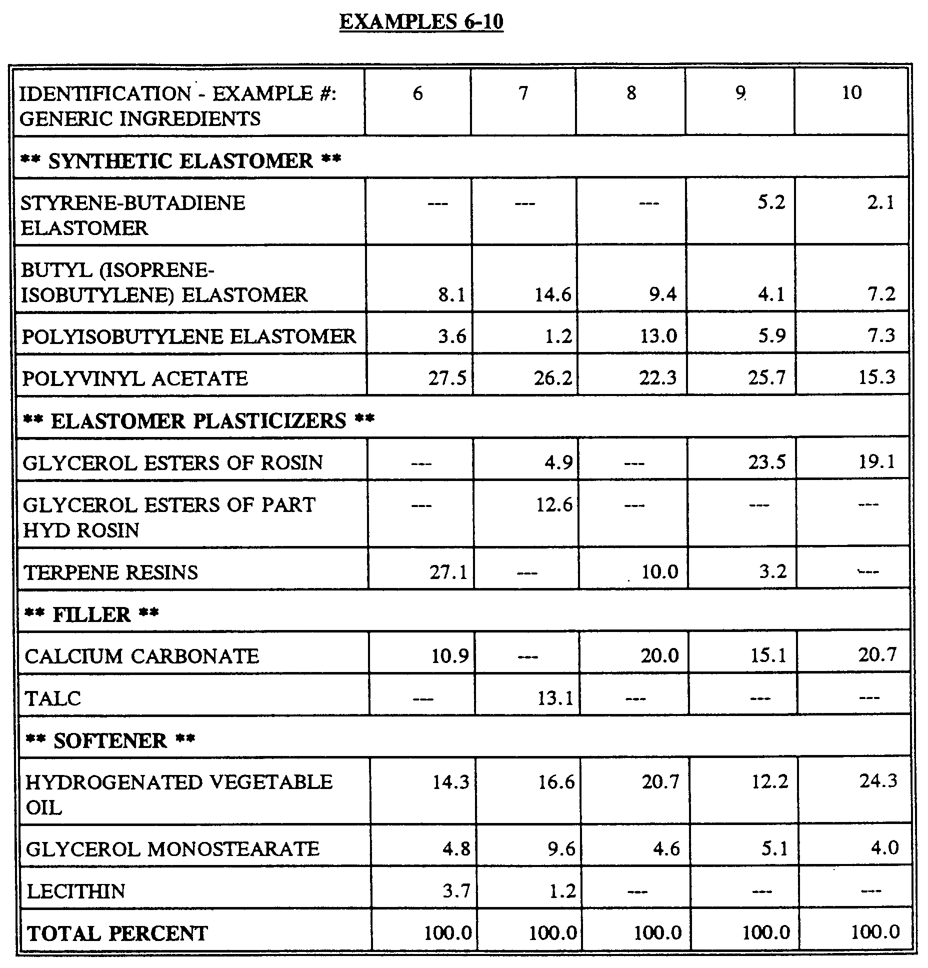

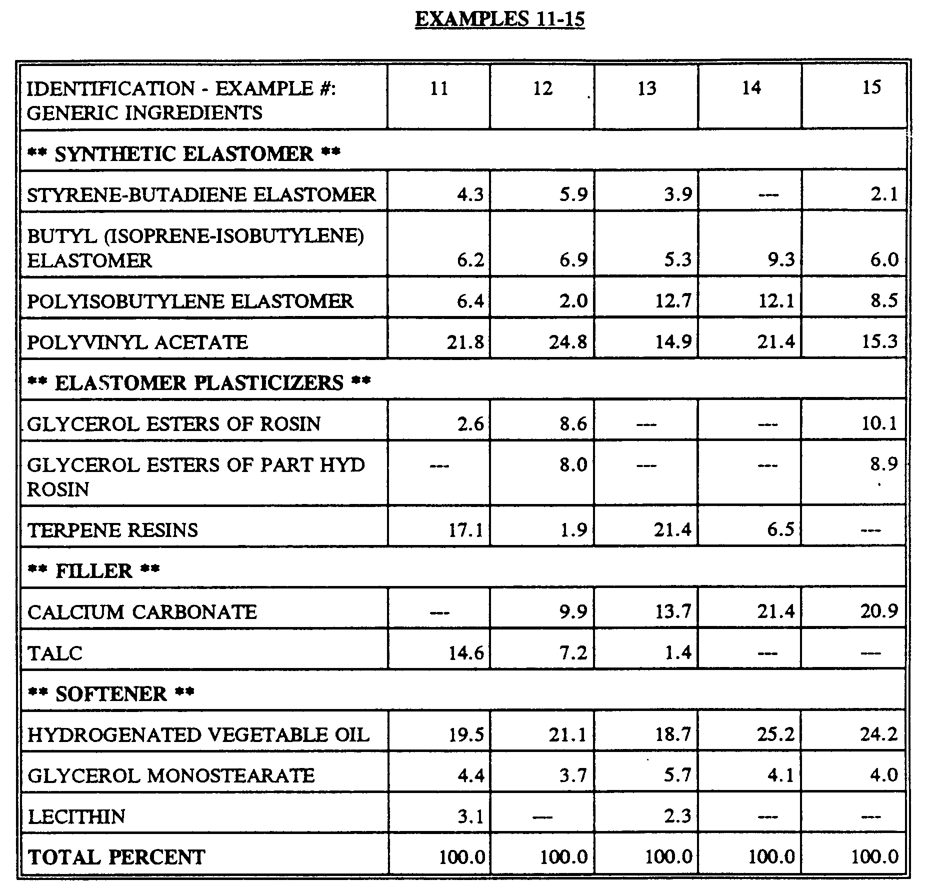

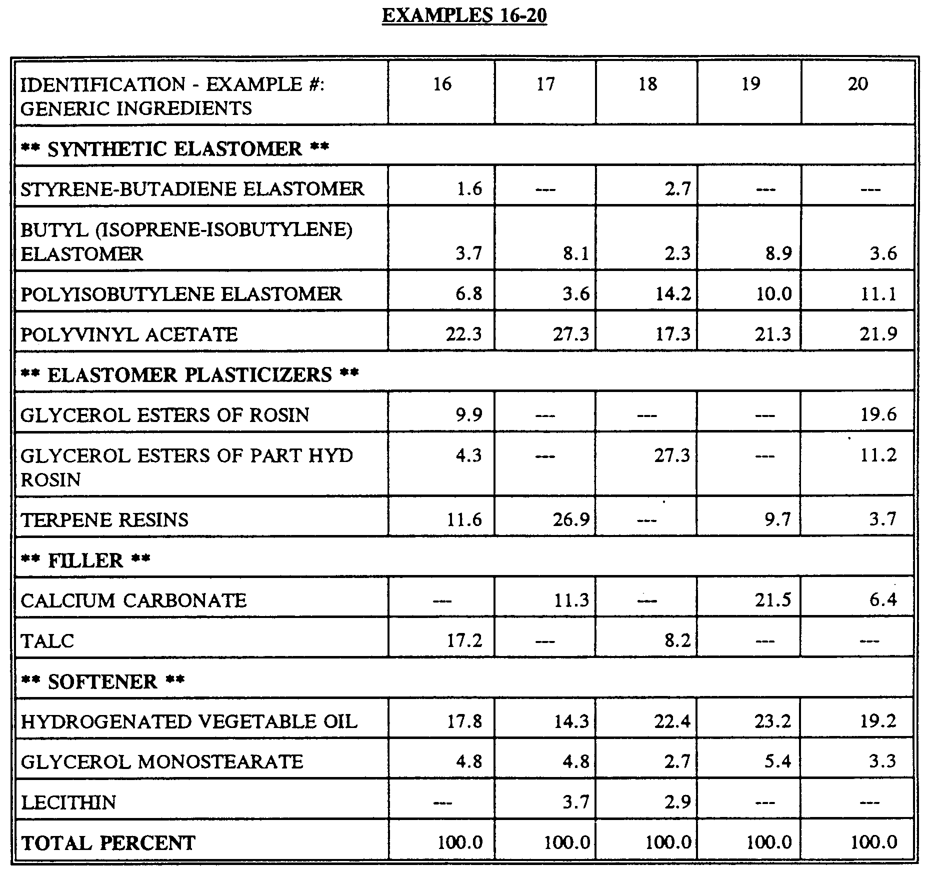

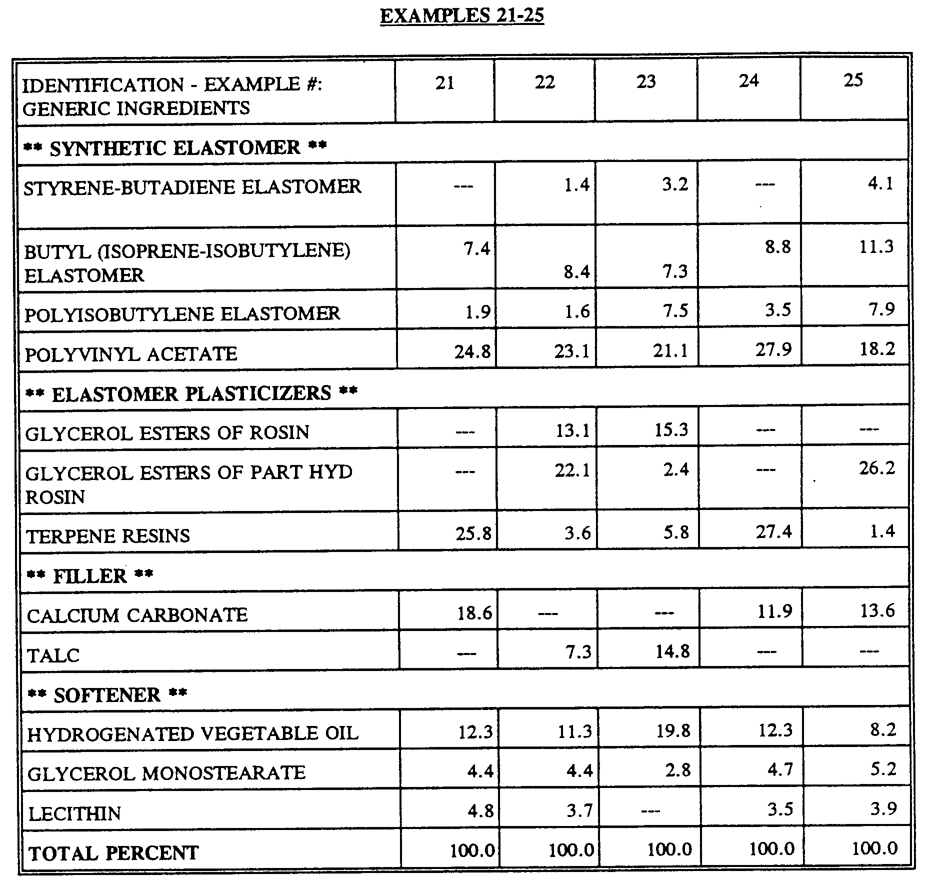

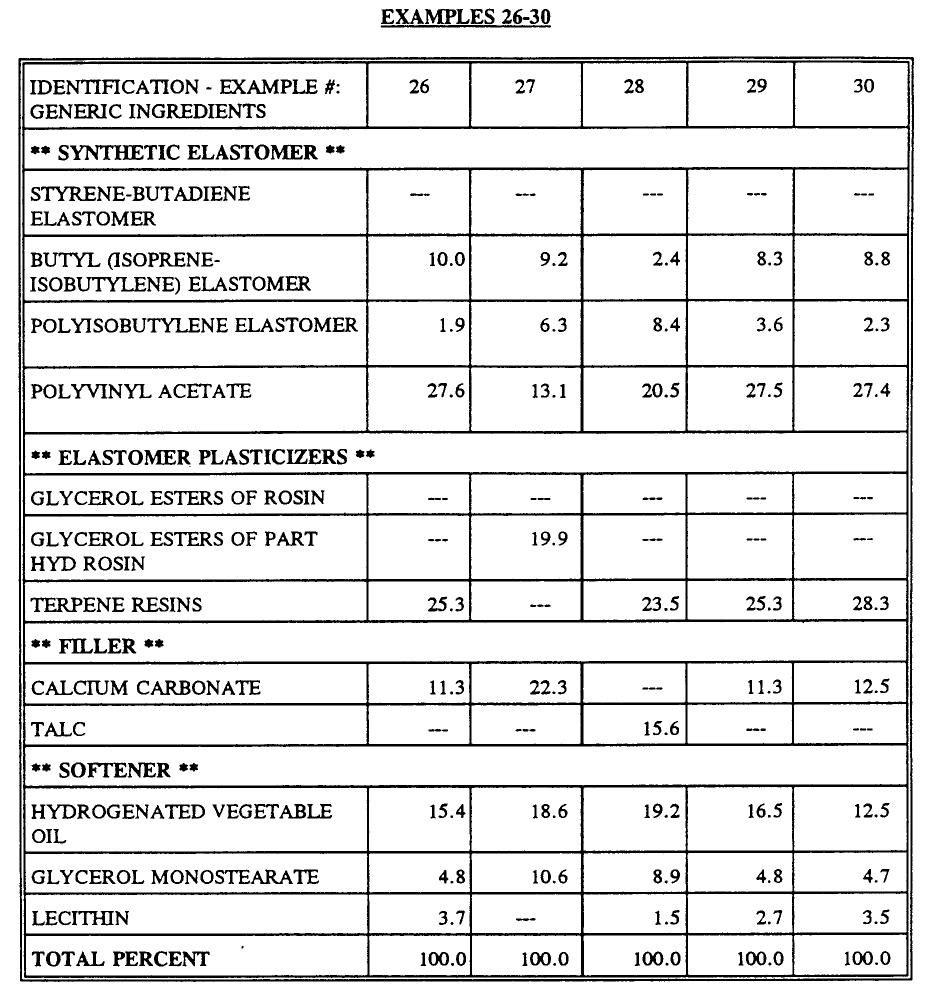

When the wax-free gum base of the invention is to be used in a regular (non-bubble) gum which does not have abhesive characteristics, the base should contain from 12 to 30 weight percent natural elastomer, from 20 to 40 weight percent synthetic elastomer blend, from 4 to 25 weight percent elastomer plasticizer, from 5 to 25 weight percent filler, from 15 to 30 weight percent softener, from 0 to 1 weight percent colorant and from 0 to 0.1 weight percent antioxidant. Specific embodiments of the wax-free gum base fitting this description are provided in Examples 31-55 below:

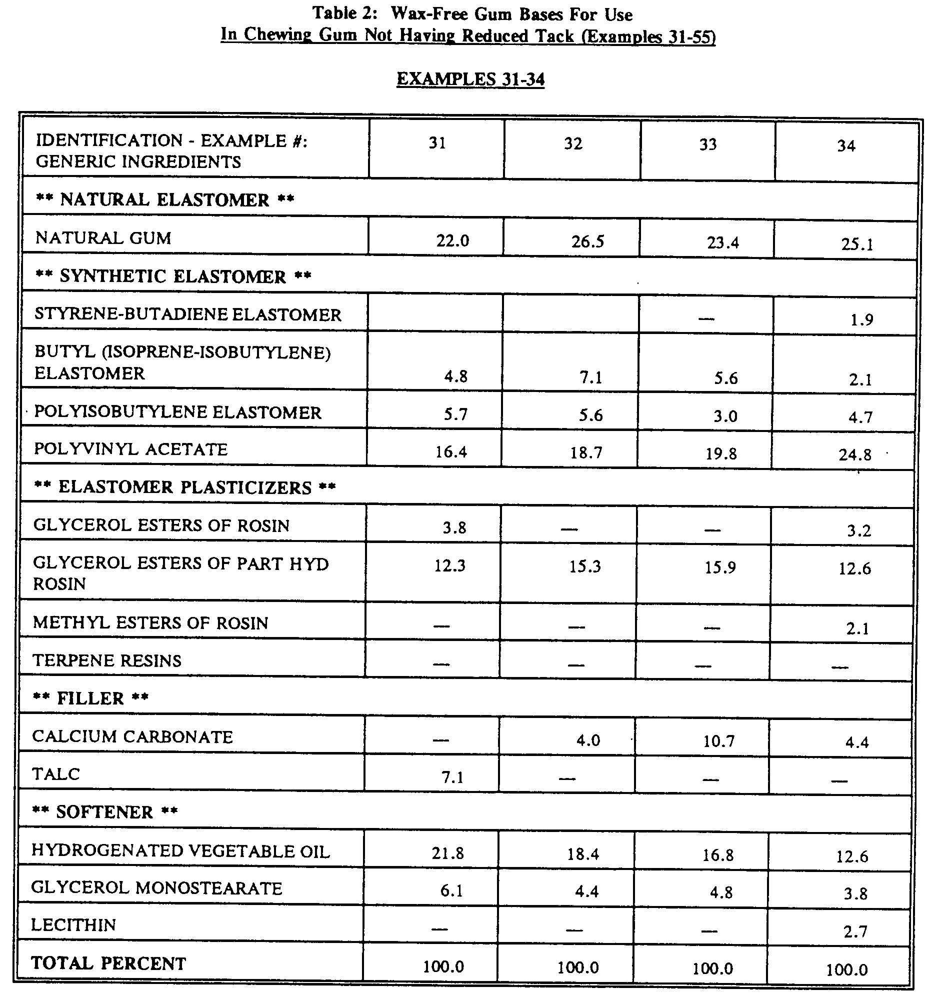

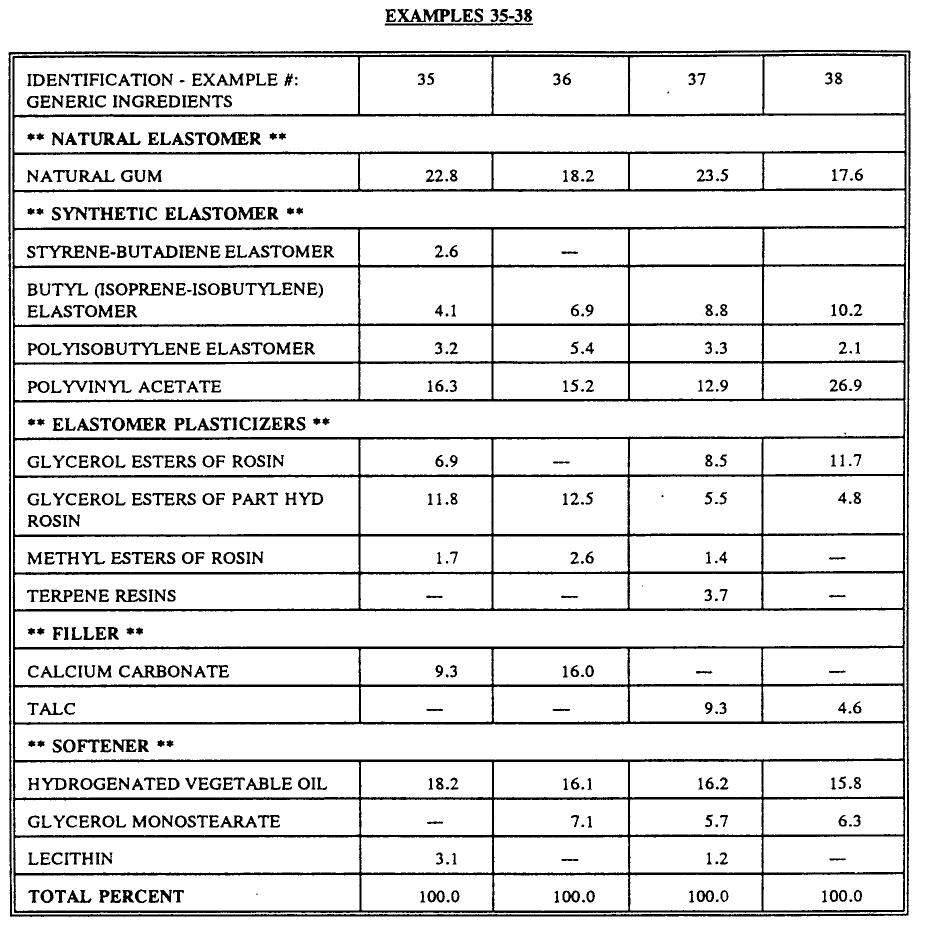

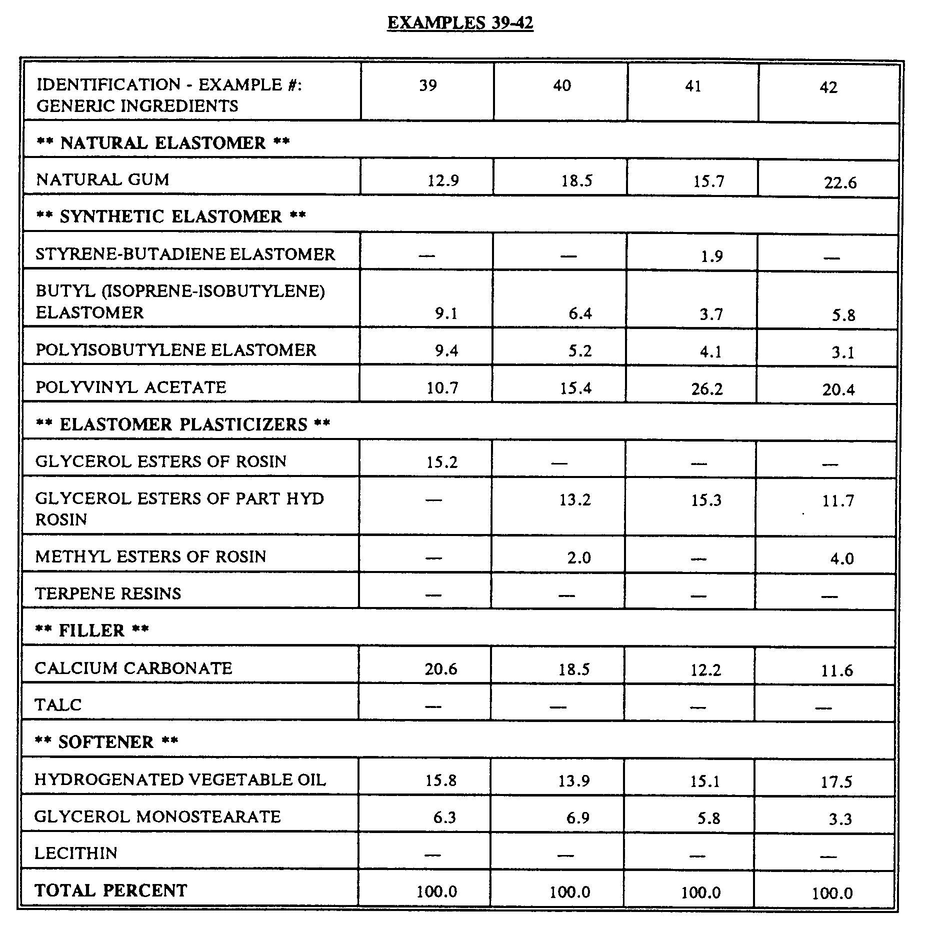

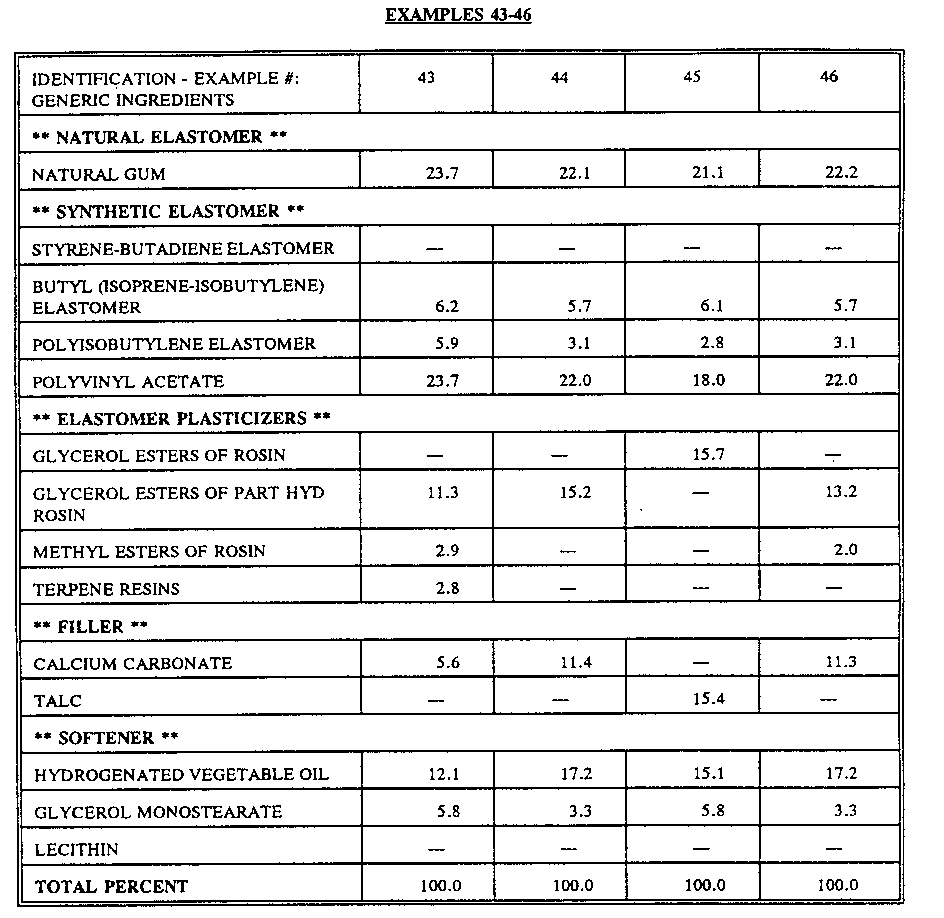

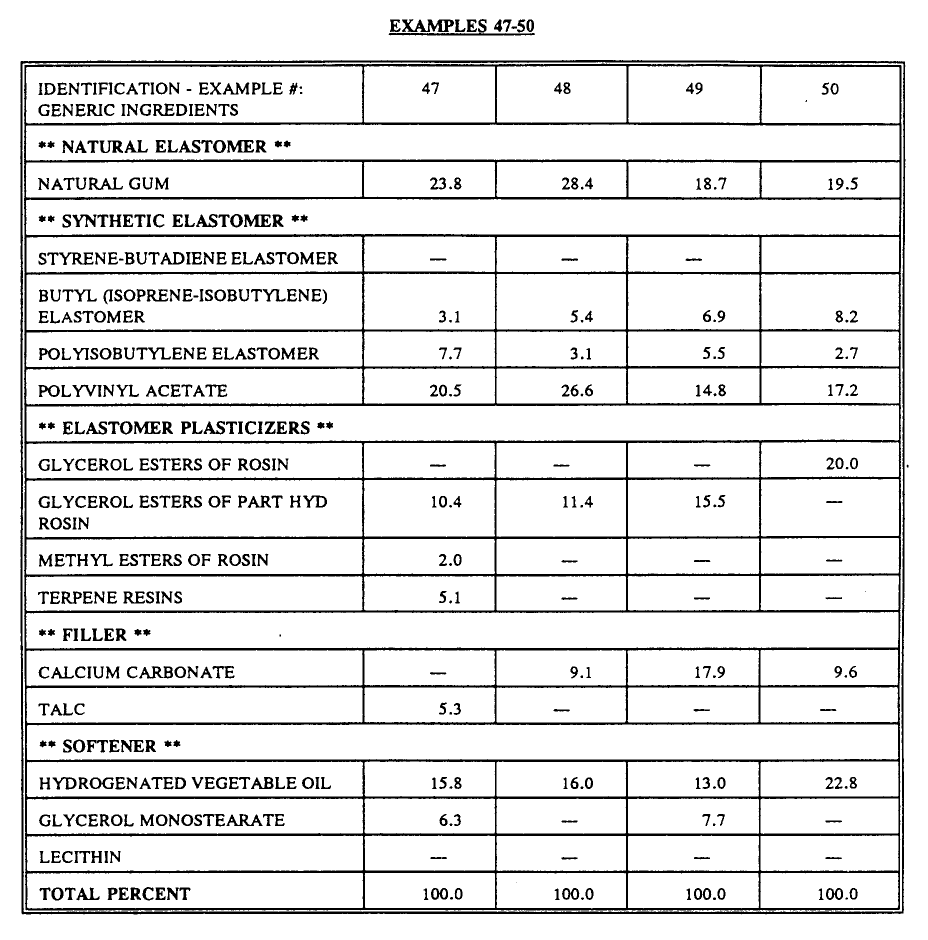

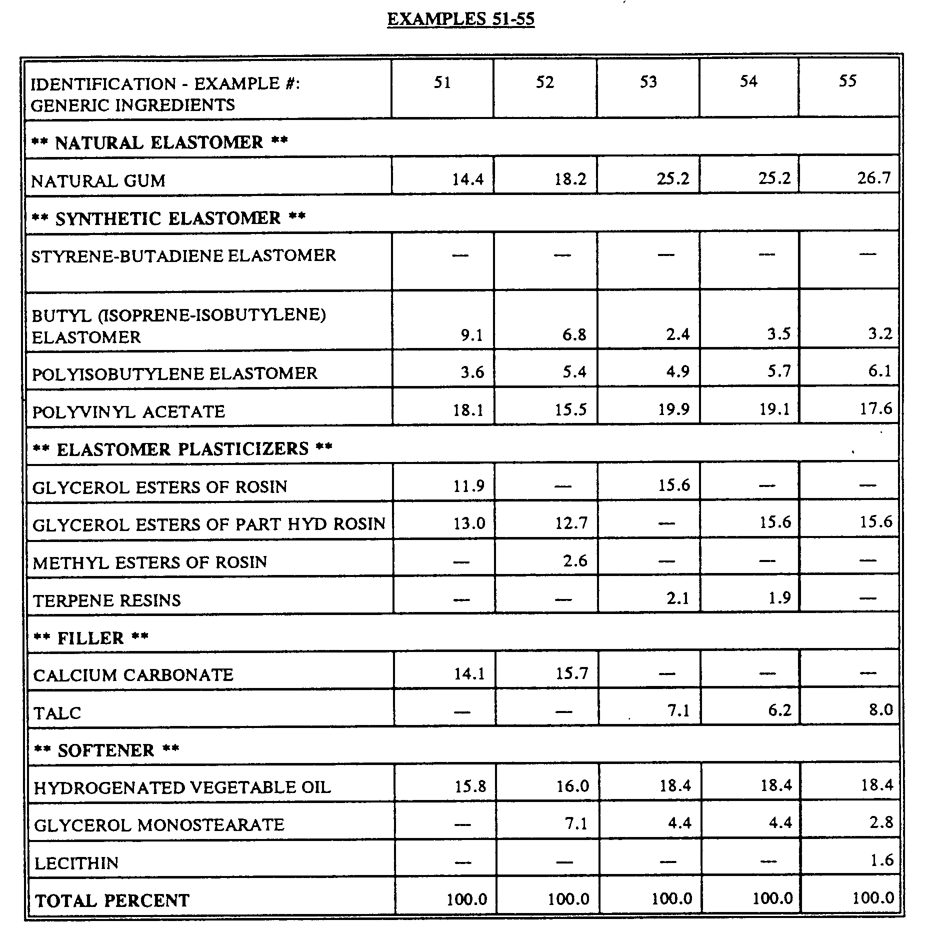

When the wax-free gum base of the invention is to be used in a bubble gum, the base should contain from 30 to 60 weight percent synthetic elastomer, from 5 to 55 weight percent elastomer plasticizer, from 10 to 35 weight percent filler, from 5 to 25 weight percent softener, from 0 to 1 weight percent colorant and from 0 to 0.1 weight percent antioxidant. Specific embodiments of the wax-free base for use in bubble gum are provided in Examples 56-74 below.

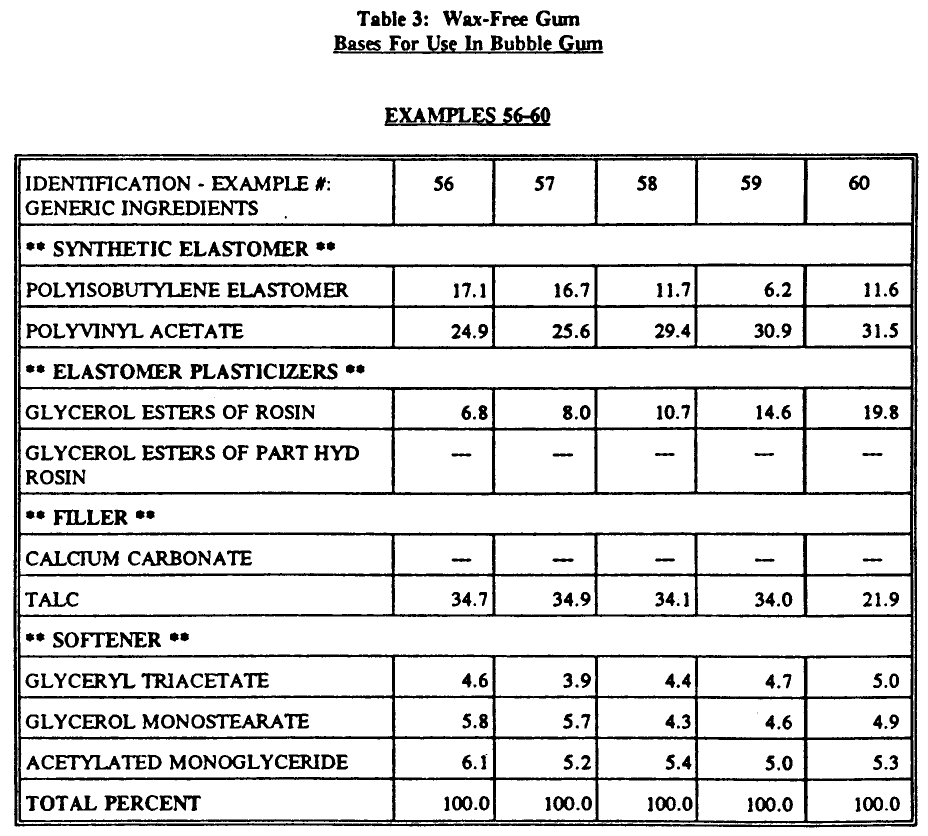

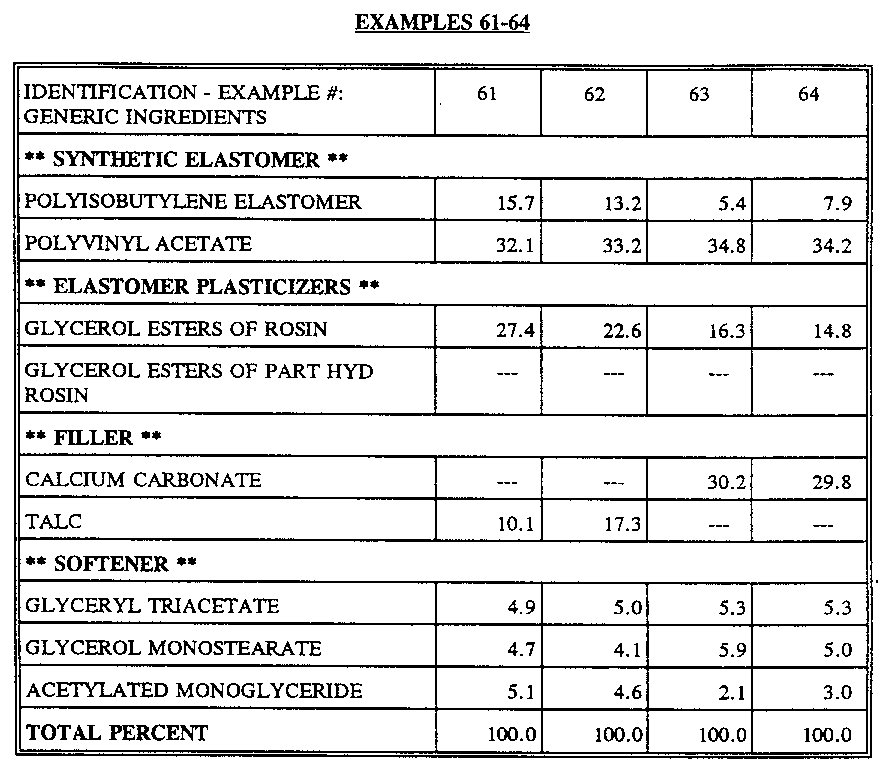

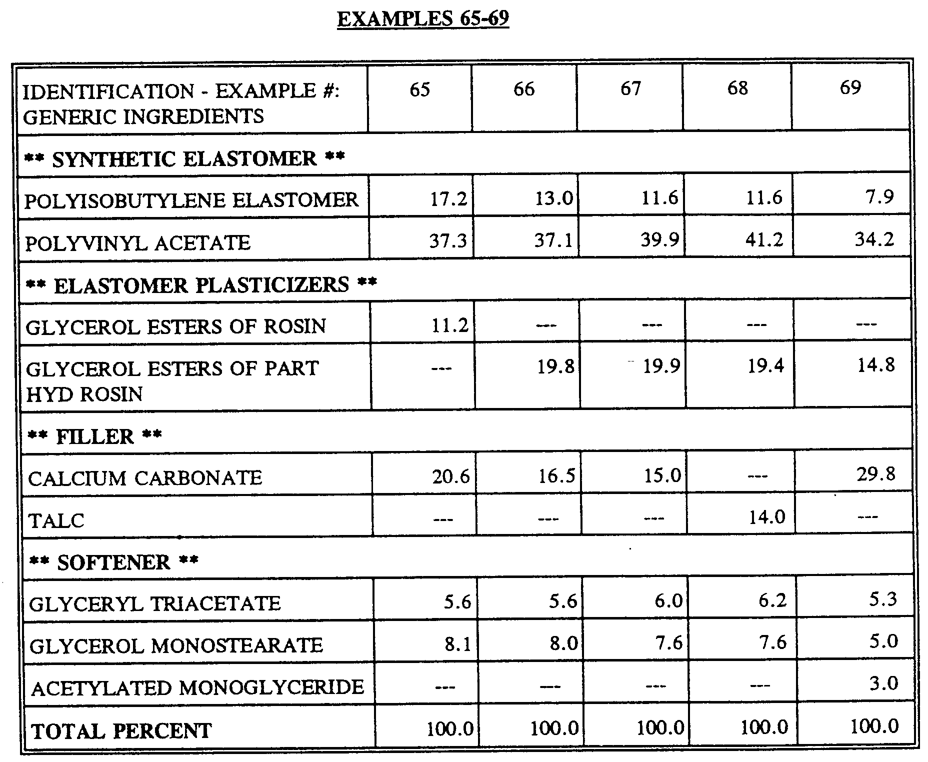

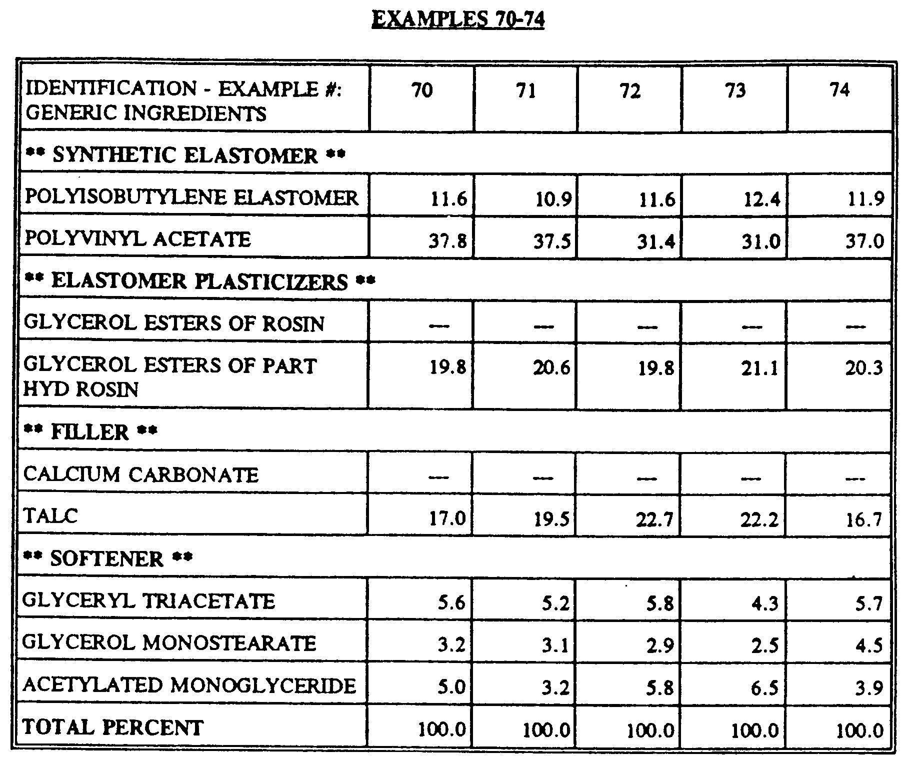

The wax-free gum base of the invention constitutes from 5 to 35 weight percent of the chewing gum. The gum base is typically prepared by adding an amount of the elastomer, elastomer plasticizers and filler to a heated sigma blade mixer with a front to rear blade speed ratio of typically 2:1. The initial amounts of ingredients are determined by the working capacity of the mixing kettle in order to attain a proper consistency. After the initial ingredients have massed homogeneously, the balance of the elastomer plasticizer, filler, softeners, etc. are added in a sequential manner until a completely homogeneous molten mass is attained. This can usually be achieved in one to four hours, depending on the formulation. The final mass temperature can be between 60°C and 150°C, more preferably between 80°C and 120°C. The completed molten mass is emptied from the mixing kettle into coated or lined pans, extruded or cast into any desirable shape and allowed to cool and solidify.

Although the above method for making base is typical, slight modifications can be practiced to reach the preferred gum bases providing the improved wax-free chewing gum with initial soft bite.

For example, at least two or more elastomers may be blended in a particular gum base. These blended elastomer gum bases may include at least two, or more, of the synthetic elastomers selected from the group consisting of styrene-butadiene copolymer, polyisoprene, polyisobutylene, and isobutylene-isoprene copolymer (referred to as butyl elastomer).

These synthetic elastomers have been described earlier. Their blending in the gum bases requires their sequential addition to the mixer, in any sequence selected by the operator, but may be enhanced in the initial blends by the presence in the mixer/blender of at least a portion of the elastomer plasticizer, the vinyl polymer, i.e. polyvinylacetate, and optionally, at least some portion of the softeners, particularly the hydrogenated vegetable oils and/or the triacetin, lecithin, or glycerol monostearate.

The preferred blend of synthetic elastomers is the blend containing from 0 to 20 percent SBR copolymer, 20 to 80 percent PIB elastomer, and 5 to 40 percent butyl elastomer, and from 10 to 60 percent polyvinylacetate.

It has also been found that there is a preferred method for making the bubble bases described in this invention.

First, all of the polyvinylacetate and portions of the polyisobutylene and filler are added and blended in a heated sigma blade mixer. Softeners such as vegetable oils, glycerol triacetate, glycerol monostearate and/or acetylated monoglyceride are then added along with a second portion of each of polyisobutylene (or other elastomers) and filler. Acetylated monoglyceride or other selected softeners may be added at the end of the process if desired and still not alter the chewing texture of the gum made from the base.

Next, the rest of the polyisobutylene (or other elastomers selected) and filler are added along with the elastomer plasticizer. Finally, the remaining ingredients such as glycerol monostearate and antioxidants may be added. Colorant may be added at any time during the mixing process and is preferably added at the start.

There are some variations to the above described preferred method which in no way limits the method as described. Those skilled in the art of gum base manufacture may be able to appreciate any minor variations.

In producing wax-containing gum bases high in polyvinylacetate, and particularly those high in high molecular weight polyvinylacetate, it is advantageous to improve blending of the ingredients by removing the heat applied to the sigma blade mixer at some point in the process. This reduces the temperature of the gum base and causes greater compatibility of its ingredients. In the inventive gum base process for making the inventive gum base free of wax, there is no need to remove the heat applied. The degree of incompatibility is greatly reduced since there is no wax present. Nevertheless, heat is preferably removed at from 30 minutes to 90 minutes into the mixing time of the base production process.

In addition to the water-insoluble gum base, a typical chewing gum composition includes a water soluble bulk portion and one or more flavoring agents. The wax-free gum base of the invention can be used in any typical chewing gum composition.

The water soluble bulk portion of the chewing gum may include softeners, bulk sweeteners including high intensity and low intensity sweeteners, binding agents, flavoring agents and combinations thereof. Water soluble or water dispersible softeners are added to the chewing gum in order to optimize the chewability and mouth feel of the gum, and to help achieve the initial soft bite of the improved wax-free chewing gums of this invention. These softeners can be the same or very similar to the softeners used to make the gum base, but these softeners are preferably not oil soluble compounds, for example, the vegetable oil softeners of the gum base. The softeners, which are also known as plasticizers or plasticizing agents, generally constitute from 0.5 to 15% by weight of the chewing gum. The water soluble/water dispersible softeners may include glycerin, lecithin, glycerol monostearate, hydroxylated lecithin, agar, carrageenan, and combinations thereof. They may not necessarily be completely soluble in water, but may themselves be dispersible in water, or be made dispersible in water by use of emulsifiers.

Aqueous sweetener solutions such as those containing sorbitol, hydrogenated starch hydrolysates, corn syrup and combinations thereof, may also be used as softeners and binding agents in chewing gum. Certain glycerin coevaporated syrups may be preferred.

Bulk sweeteners constitute from 5 to 95% by weight of the chewing gum, more typically 10 to 90% by weight of the chewing gum and most commonly 30 to 70% by weight of the chewing gum. Bulk sweeteners may include either sugar or sugarless sweeteners and components, or both. Sugar sweeteners may include saccharide containing components including but not limited to sucrose, dextrose, maltose, dextrin, dried invert sugar, fructose, levulose, galactose, corn syrup solids, high maltose syrup, invert/high fructose syrup, maltotriose, glyceraldehyde, erythrose, xylose, lactose, leucrose, L- sugars, fructooligosaccharide and low calorie bulking agents such as indigestible dextrin, guar gum hydrolyzate, oligofructose, polydextrose, and the like, alone or in combination.

Sugarless sweeteners include components with sweetening characteristics but are devoid of the commonly known sugars. Sugarless sweeteners include but are not limited to sugar alcohols such as sorbitol, mannitol, xylitol, hydrogenated starch hydrolysates, maltitol, lactitol, erythritol, cellobiitol, and the like, alone or in combination.

High intensity sweeteners may also be present and are commonly used with sugarless sweeteners. When used, high intensity sweeteners typically constitute between .001-5.0% by weight of the chewing gum, preferably between .01-1.0% by weight of the chewing gum. Typically, high intensity sweeteners are at least 20 times sweeter than sucrose. These may include but are not limited to sucralose, aspartame, salts of acesulfame, alitame, saccharin and its salts, cyclamic acid and its salts, glycyrrhizin, dihydrochalcones, thaumatin, monellin, stevia and the like, alone or in 3 combination.

Sweeteners, particularly high intensity sweeteners, can be incorporated into chewing gum after being modified or encapsulated in order to modify their release. The most common ways of modifying the release of the active ingredients include spray drying, spray chilling, fluid-bed coating, coacervation, absorption, extrusion encapsulation, and other standard encapsulating techniques.

Combinations of sugar and/or sugarless sweeteners may be used in chewing gum. The sweetener may also function in the chewing gum in whole or in part as a water soluble bulking agent. Additionally, the sweetener may also provide additional binding such as with aqueous sugar or alditol syrups/solutions.

Flavoring agents should generally be present in the chewing gum in an amount within the range of from 0.1 to 15% by weight of the chewing gum, preferably from 0.2 to 5% by weight of the chewing gum, most preferably from 0.5 to 3% by weight of the chewing gum. Flavoring agents may include essential oils, synthetic flavors or mixtures thereof including but not limited to oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion.

Optional ingredients such as colors, food acidulants emulsifiers, pharmaceutical agents, vitamins, and additional flavoring agents may also be included in chewing gum.

The preferred and improved wax-free chewing gums of the invention have been formulated to have an initial soft bite, to set-up or temper rapidly during production, and to achieve more efficient production yields. To accomplish each of their goals, the gum bases are preferably formulated with blends of synthetic elastomers, particularly blends of the preferred three or four elastomers discussed above. These elastomers, SBR, PIB, and butyl elastomer and polyvinylacetate are contained in the gum base, which base may also contain the other ingredients earlier described.

These gum bases are then blended with water soluble bulk ingredients and flavors to achieve the improved wax-free chewing gums, bubble gums, or specialty gums of the invention.

The removal of mineral wax from a chewing gum causes several problems. Since wax acts as a binder, additional binders or ways to bind ingredients together are needed. One way is to increase the level of syrups, but this is not particularly of choice when a sugar-free, sugarless, or low-calorie chewing gum is to be the end product. Another way is to increase the level of total elastomer.

Wax also contributes to chewing characteristics in gums. Depending on the melting point of the wax, the wax can contribute to soft chew or to firm or hard chew. The prior art often blended waxes to achieve some aspects of both.

Wax also tended to retain flavors in a way that would not provide flavoring ingredients to the customer during the chew. Wax-free gums have been found to release flavor more rapidly, and more efficiently over the life of the chew.

Some wax-free gums have had a tendency to be flaccid, not having good initial soft bite nor cohesiveness and having a tendency to fall apart during the chew. The improved wax-free gums of the invention have an initial soft bite, good cohesiveness, have improved flavor and sweetener release, and can be manufactured more quickly and more efficiently.

The improved chewing gums are particularly enjoyable and effectively manufactured by their use of the multiple elastomer gum bases. The bases contain polyvinylacetate and selected elastomer plasticizers and selected softeners and fillers.

The selected elastomer plasticizers are those plasticizers demonstrated in Examples 1-74, and the selected fats, oils and softeners are those fats, oils and softeners demonstrated in Examples 1-74. Particularly good results are found with gum bases containing PIB, butyl rubbers, and SBR elastomers, in the presence of polyvinylacetate, and optionally certain natural elastomers. The bases also advantageously contain glycerol esters of rosin, glycerol esters of partially hydrogenated rosin, terpene resins, or mixtures thereof, and may also contain methyl or ethyl esters of Rosin.

The bases also advantageously contain fats, oils and softeners preferably selected from the group consisting of hydrogenated vegetable oil, partially hydrogenated vegetable oils, glycerol monostearate, glycerol triacetate, lecithin, and/or mixtures thereof. Bubble gums according to the invention normally contain higher concentrations of polyvinylacetate and lower amounts of fats and oils, particularly the hydrogenated vegetable oils, but still contain the other softeners. Attention is drawn to the gum bases, Examples 1-74.

The multiple elastomer gum bases with polyvinylacetate, selected elastomer plasticizers and softeners (and fillers) are blended with water soluble ingredients and flavors.

Slight decreases in concentration of certain flavors, compared to wax containing gums, are possible with the wax-free gums.

Improved binders are also advantageous in these wax-free gums. Total binder content can be increased from 1.0 to 10 percent, relative to wax containing gums. This may be dependent on the final product and whether it contains sugar or is essentially sugar free. Binders can include corn syrup, glycerin coevaporated hydrogenated starch hydrolyzate (HSH) syrup, preferably coevaporated LYCASIN containing 25 percent glycerin, 7.5 percent water, and 67.5 percent HSH solids (all by weight) or other sugar or sugar alcohol syrups/solutions.

The improved gum bases of this invention provide improved wax-free chewing gums having initial soft-bite. Preferably, the wax-free gums contain low-moisture, that is from 0.1 weight percent to 2.0 weight percent water.

Chewing gum is generally manufactured by sequentially adding the various chewing gum base, water soluble bulk portion and flavor ingredients to any commercially available mixer known in the art. After the ingredients have been thoroughly mixed, the gum mass is discharged from the mixer and shaped into the desired form. Generally, the ingredients are mixed by first melting and filtering the gum base and adding it to the running mixer. The gum base may alternatively be melted in the mixer. Color and emulsifiers can be added at this time.

A preferred water soluble softener, such as glycerin, can be added next along with a binding syrup and part of the bulk portion. Further parts of the bulk portion (for example sucrose or xylitol) may then be added to the mixer. Flavoring agents are typically added with the final part of the bulk portion. The entire mixing process typically takes from five to fifteen minutes, although longer mixing times are sometimes required. Those skilled in the art will recognize that variations of this mixing procedure, or other mixing procedures, may be followed. A gum loaf is formed as the chewing gum mixture is discharged from the mixer. The wax-free loaf obtained with our invention is cured or tempered for less than 15 minutes and then fed to an extruder. The extruder inlet temperature is about 40± 5°C and the outlet temperature is about 60± 5°C. The extruder outlet extrudes an essentially continuous chewing gum strip or rope, and when the final product is a stick gum or a pelleted gum, the extruder is set to form a ribbon, said ribbon having a thickness of from 12.7 to 76.2 mm. (0.5 to 3.0 inches) and a width of from 304.8 to 635 mm. (12 to 25 inches).

The chewing gum ribbon can be dusted with various substances to reduce the stickiness and improve the initial taste of the gum. The materials used to dust the chewing gum are referred to as "dusting compounds" or, alternatively "rolling compounds", because the compounds are used to make the gum ribbon more manageable during processing including rolling and sheeting. The rolling compound used can be selected from the group consisting of sucrose, mannitol, starch, calcium carbonate, talc, lactitol, palatinit (Trade Mark). (hydrogenated isomaltulose), lactose, and combinations thereof. To improve the flavor impact and duration of the gum, flavor, gum base, and sweetener can be added to the rolling compound.

The dusted ribbon, having been treated with rolling compound, then undergoes multiple passages through at least one and preferably several sets of counter-rotating reducing rollers and finishing rollers. This operation greatly elongates the ribbon and decreases its thickness to desired end product thickness. For stick gum, this ranges from 1.27 to 2.54 mm. (0.05 to 0.10 inches), preferably from 1.52 to 2.03 mm. (0.06 to 0.08 inches), and for pellet gum, this ranges from 3.81 to 7.62 mm. (0.150 to 0.300 inches), preferably from 4.57 to 6.35 mm. (0.18 to 0.25 inches).

The ribbon is then scored and cut, further tempered for from 6 to 24 hours, and wrapped, or in the case of finished pelleted gum, coated and packaged. A wax containing gum requires from 24 to 48 hours to temper to a toughness required to undergo wrapping. The new wax-free gums only require 6 to 24 hours, and when stick gum is made, tempering time is from 6 to 12 hours.

Chewing gum products contemplated as part of the present invention have an initial soft bite and are simultaneously tough enough to be tempered quickly and wrapped quickly.

Initial soft bite is normally a characteristic of chewing gums which do not have good toughness. Wax containing gums with soft bite are often fragile, require extended tempering times, require increased trim gum recycle, and are difficult to wrap, because the gum is not tough. This extends production time as much as 20 to 24 hours, relative to these new products.

Soft bite is believed to be related to Taber Stiffness. Gum stiffness may be measured by the Taber V-5 Stiffness Testor Method, such method using the Taber Testor, Model 150 B, available from Taber Instrument Corporation, North Tonawanda, New York.

Taber Stiffness is a measure of the chewing gums resistance to bending. The lower the Taber Stiffness measurement, the softer the initial bite.

Gum toughness is a concept primarily useful in attempting to judge the ease of machine handling a sheet or card of processed flattened chewing gum ribbon, particularly as the gum ribbon is further processed to gum sheets and gum sticks and then wrapped.

If a gum does not have good toughness, the handling of the gum sheets, gum cards, or sticks can cause bending, or premature stick separation, and this can delay wrapping and cause production down-time.

The wax-free gums of the invention have softer initial bite as measured by a Taber Stiffness at least 5 percent less than that of comparable wax containing chewing gums, and still provide adequate toughness for wrapping. In fact, the wax-free gums of the invention provide a good surface toughness and, in spite of the good initial softness can be processed, tempered, and wrapped in at least from 10 to 60 percent of the time required for a comparable wax containing gum.

The gums also have lower Instron yields, another measure of softness. The Instron yields of our gum are normally from 0.00023 kg/m to 0.00092 kg/m (0.02 to 0.08 pound-inches). However, Instron data can be outside this range, but are at least 5 percent below those for comparable wax gums.

These unique physical characteristics of soft bite and good surface toughness with fast set-up time (sometimes referred to as tempering time), good elastic memory, and the ability of the chewing gums of this invention to be processed more efficiently, with less waste, lower requirement for trim gum, allow these gums to be processed to a final wrapped product in from 10 percent to up to 60 percent of the time required for a comparable wax containing chewing gum.

The chewing gum products available with the improved wax-free chewing gum bases and formulations are generally similar to products using traditional wax containing bases. Many general types of products can be produced including reduced tack gums, sugarless gums, bubble gums (sugarless or sugar containing), coated ball or pellet gums (sugarless or sugar-containing), dental health gums, breath freshening gums, novelty gums, low calorie gums and pharmaceutical gums. The products may be of any flavor, and may be processed in a variety of ways in either batch or continuous processes, and formed into any final shape including sticks, tabs, chunks, tapes, coextruded products, molded shapes, etc.

The following formulas are illustrative of types of products which may be produced. All ingredient levels are expressed in weight percent.

Examples 75-98 illustrate non-tack and reduced-tack chewing gums of the present invention. As can be seen, there is much latitude in the selection of flavors sweeteners and ingredient levels. Examples 75-86 illustrate use of the invention with sugar gums while Examples 87-98 describe sugarless gums. Encapsulated sweeteners are used to extend sweetness and flavor and to protect the artificial sweetener from degradation during storage. Examples 89 and 91 are low moisture products having moisture levels below 2%.

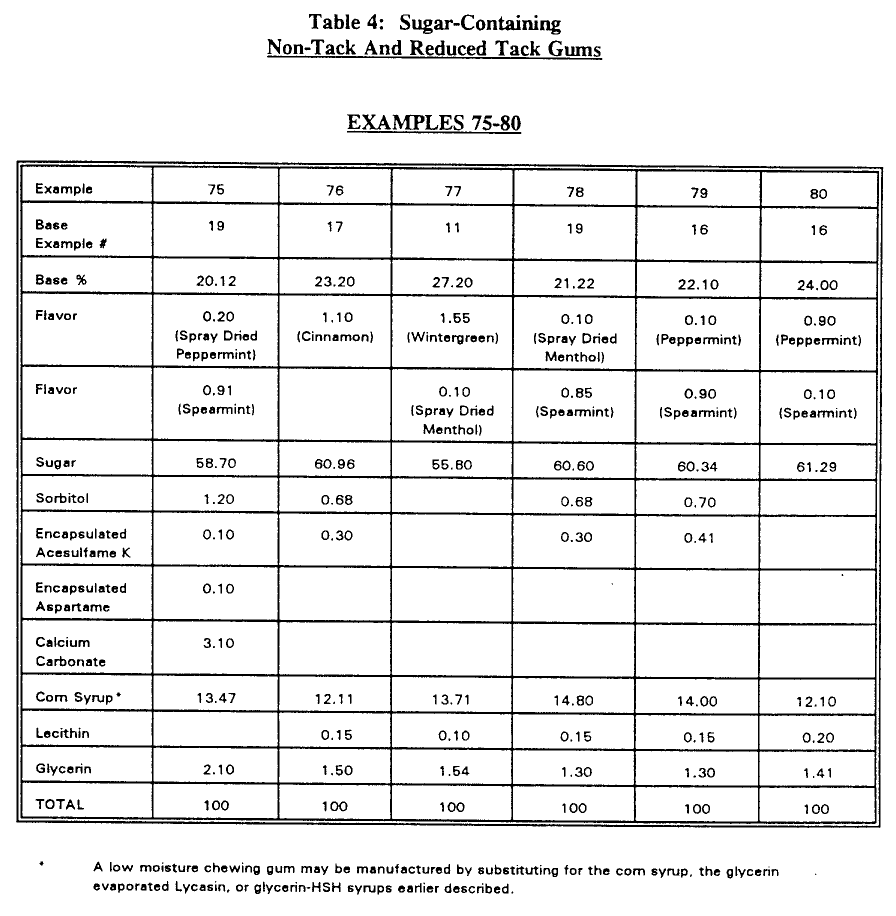

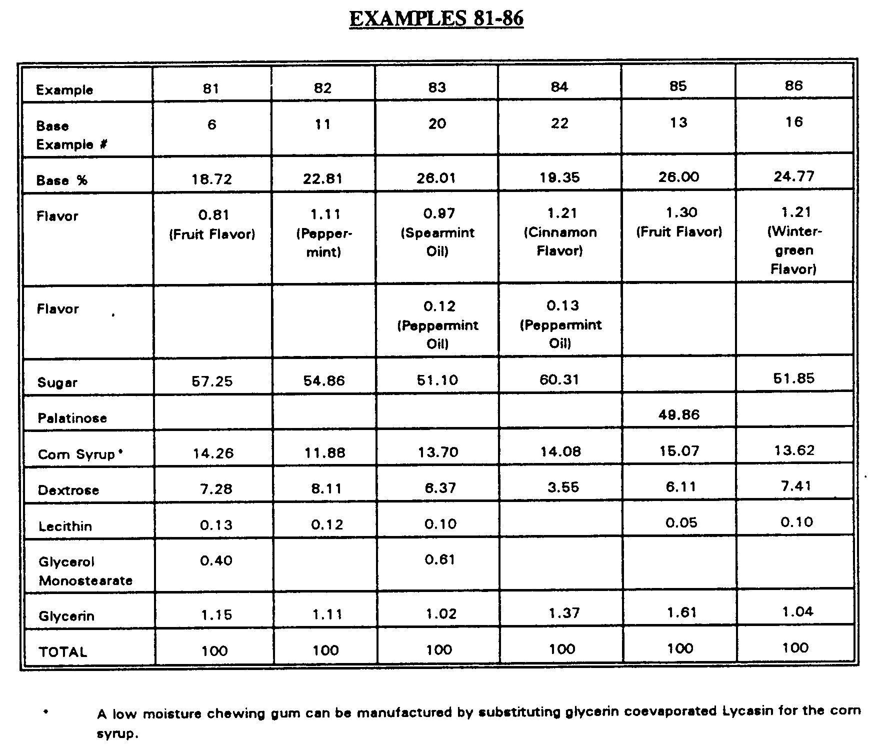

**Table 5**

| **Sugarless Non-Tack And Reduced Tack Gums** **EXAMPLES 87-92** | | | | | | |
|---|---|---|---|---|---|---|
| Example | 87 | 88 | 89 | 90 | 91 | 92 |
| Base Example # | 3 | 19 | 7 | 24 | 24 | 8 |
| Base % | 24.00 | 27.11 | 21.21 | 29.48 | 22.58 | 18.11 |
| Flavor | 1.07 (Citrus Oils) | 0.98 (Peppermint) | 0.97 (Spearmint Oil) | 1.15 (Peppermint Oil) | 1.47 (Cinnamon Flavor) | 1.00 (Wintergreen Oil) |
| Flavor | | 0.20 (Spray Dried Menthol) | 0.15 (Peppermint Oil) | 0.21 (Spearmint Oil) | | 0.27 (Peppermint Oil) |
| Sorbitol | 51.00 | 55.06 | 55.70 | 55.15 | 48.00 | 57.53 |
| Calcium Carbonate | | | 2.11 | | 2.00 | 4.70 |
| Sorbitol Solution | 6.42 | | | | | |
| Coevaporated Lycasin (7.5% water, 25% glycerin) | 10.37 | 9.16 | 4.00 | 8.11 | 12.01 | 8.88 |
| Glycerin | 4.70 | 4.11 | 12.11 | 3.11 | 11.61 | 7.10 |
| Mannitol | 2.10 | 3.10 | 3.11 | 2.66 | 2.00 | 2.00 |
| Encapsulated Aspartame | 0.19 | | 0.25 | | | 0.21 |
| Free Aspartame | 0.05 | | 0.10 | | | 0.10 |
| Encapsulated Alitame | | 0.05 | | 0.10 | | |
| Free Alitame | | | | 0.03 | | |
| Encapsulated Sucralose | | | | | 0.21 | |
| Free Sucralose | | 0.08 | | | 0.02 | |
| Lecithin | 0.10 | 0.15 | 0.20 | | 0.10 | 0.10 |
| TOTAL | 100 | 100 | 100 | 100 | 100 | 100 |

**Table 6**

| Reduced And Regular Tack Low Calorie Gums **EXAMPLES 93-98** | | | | | | |
|---|---|---|---|---|---|---|
| Example | 93 | 94 | 95 | 96 | 97 | 98 |
| Base Example # | 6 | 3 | 19 | 13 | 52 | 44 |
| Base % | 19.2 | 24.7 | 19.2 | 24.0 | 19.2 | 19.2 |
| Sorbitol | | 6.0 | | | | |
| Mannitol | | 1.0 | | | | |
| Corn Syrup* | | | 6.0 | 24.6 | 18.5 | 6.0 |
| Dextrose | | | 10.0 | | 10.0 | 10.0 |
| Lactose | | | 5.0 | | | 5.0 |
| Glycerin | 2.0 | 16.4 | 8.9 | 0.4 | 1.4 | 8.9 |
| Lecithin | | 0.2 | | | | |
| Flavor | 1.0 | 1.4 | 0.9 | 1.0 | 0.9 | 0.9 |
| Oligofructose | | | 50.0 | 50.0 | | |
| Fructooligosaccharide | | | | | 50.0 | 50.0 |
| Color | | 0.05 | | | | |
| Aspartame | | 0.25 | | | | |
| High Mol. Weight Indigestible Dextrin | 57.8 | | | | | |
| Low Mol. Weight Indigestible Dextrin | | 50.0 | | | | |
| Indigestible Dextrin Syrup** | 20.0 | | | | | |
| TOTAL | 100 | 100 | 100 | 100 | 100 | 100 |

| | | | | | | |
|---|---|---|---|---|---|---|
| * Corn syrup may be partially or wholly substituted by glycerin coevaporated Lycasin. | | | | | | |
| ** Indigestible dextrin syrup may also be coevaporated with glycerin to achieve a softener/binder for use in the gums of this invention. | | | | | | |

Examples 99-104 are sugarless products made with the non-reduced-tack bases of the present invention. Examples 105-110 are equivalent sugar products.

**Table 7**

| Regular Tack Sugarless Gums **EXAMPLES 99-104** | | | | | | |
|---|---|---|---|---|---|---|
| Example | 99 | 100 | 101 | 102 | 103 | 104 |
| Base Example # | 32 | 44 | 51 | 36 | 52 | 44 |
| Base % | 21.76 | 22.07 | 24.00 | 20.97 | 26.00 | 20.08 |
| Flavor | 0.92 (Peppermint Oil) | 0.77 (Spearmint Oil) | 0.83 (Spearmint Oil) | 0.99 (Cinnamon Flavor) | 0.97 (Peppermint Oil) | 1.04 (Peppermint Oil) |
| Flavor | | 0.24 (Peppermint Oil) | | | | 0.16 (Spray Dried Menthol) |
| Sorbitol | 46.54 | | | 63.61 | 51.50 | |
| Coevaporated Lycasin (7.5% Water, 25% Glycerin) | 8.47 | 7.84 | 11.20 | 7.76 | | |
| Glycerin | 5.19 | 4.91 | 2.10 | 4.20 | 12.00 | |
| Mannitol | 1.77 | | | 2.01 | 3.11 | |
| Xylitol | 15.11 | | 12.11 | | 6.27 | 78.16 |
| Palatinit (Hydrogenated Isomaltulose) | | 63.97 | 49.60 | | | |
| Aspartame | | | | 0.14 | | 0.14 |
| Encapsulated Aspartame | | | | 0.22 | | 0.22 |
| Alitame | | 0.02 | 0.02 | | | |
| Encapsulated Alitame | | 0.04 | 0.04 | | | |
| Sucralose | 0.11 | | | | 0.15 | |
| Lecithin | 0.13 | 0.14 | 0.10 | 0.10 | | 0.20 |
| TOTAL | 100 | 100 | 100 | 100 | 100 | 100 |

**Table 8**

| Regular Tack Sugar Gums **EXAMPLES 105-110** | | | | | | |
|---|---|---|---|---|---|---|
| Example | 105 | 106 | 107 | 108 | 109 | 110 |
| Base Example # | 57 | 52 | 44 | 39 | 51 | 40 |
| Base % | 22.38 | 20.60 | 20.08 | 23.11 | 20.02 | 21.01 |
| Flavor | 0.89 (Peppermint Oil) | 0.58 (Spearmint Oil) | 0.86 (Peppermint Oil) | 0.91 (Peppermint Oil) | 1.21 (Fruit Flavor) | 0.98 (Wintergreen |
| Flavor | | | | 0.21 (Spearmint Oil) | | 0.20 (Spray Dried Menthol) Flavor) |
| Encapsulated Aspartame | | | | 0.10 | | |
| Encapsulated Acesulfame K | | | | | 0.15 | |
| Sucralose | | | | | | 0.09 |
| Sugar | 58.39 | 59.49 | 62.66 | 59.97 | 63.59 | 62.51 |
| Corn Syrup* | 17.20 | 18.50 | 15.40 | 14.70 | 13.88 | 14.19 |
| Glycerin | 1.09 | 0.83 | 1.00 | 1.00 | 1.05 | 1.02 |
| Lecithin | 0.05 | | | | .10 | |
| TOTAL | 100 | 100 | 100 | 100 | 100 | 100 |

| | | | | | | |
|---|---|---|---|---|---|---|
| * Corn syrup may be partially or completely substituted for by use of glycerin coevaporated HSH (Lycasin) syrups. | | | | | | |

Examples 111-122 are examples of inventive coated pellet gums made with non-wax bases. The gum products of these examples are formed into pellets or balls for subsequent coating. Examples 111-116 are sugar pellets which could be coated with sugar syrups. Such syrups may contain modified starch (0 to 6.0%), compatible flavors and colors (0 to 0.30%), vegetable gums such as gum arabic and cellulose derivatives such as hydroxypropyl methyl cellulose (0 to 20%) in addition to sucrose or starch hydrolysate in an aqueous solution.

Examples 117-122 are sugarless pellets which can be coated with sugar alcohol solutions such as those of sorbitol, xylitol and palatinit. These syrups may also contain the same modifiers listed above for sugar syrups.

In both cases (sugar and sugarless) dry coating agent (sugar or sugar alcohol) may be added between layers of coating syrup, a process known as dry charging or soft panning.

Coating may be carried out by any suitable process, most often using a conventional pan, side vented pans, high capacity pans such as those made by Driam or Dumouline, or by continuous panning techniques.

**Table 9**

| Sugar Pellet Gums For Coating **EXAMPLES 111-116** | | | | | | |
|---|---|---|---|---|---|---|
| Example | 111 | 112 | 113 | 114 | 115 | 116 |
| Base Example # | 40 | 36 | 37 | 51 | 52 | 47 |
| Base % | 24.32 | 24.28 | 24.30 | 24.27 | 25.17 | 24.33 |
| Flavor | 0.55 (Spearmint Oil) | 0.73 (Peppermint Oil) | 2.56 (Licorice Powder) | 0.77 (Fruit Flavor) | 0.47 (Spearmint Oil) | 0.61 Spearmint Oil) |
| Flavor | | | 0.60 (Menthol/Anethol | | 0.15 (Peppermint Oil) | |
| Sugar | 52.97 | 52.87 | 50.94 | 52.85 | 52.59 | 52.84 |
| Corn Syrup* | 22.16 | 22.12 | 21.60 | 22.11 | 21.62 | 22.22 |
| TOTAL | 100 | 100 | 100 | 100 | 100 | 100 |

| | | | | | | |
|---|---|---|---|---|---|---|
| * Corn syrup may contain a portion of glycerin coevaporated Lycasin. Corn syrup may also be high solids corn syrup or corn syrup solids. | | | | | | |

**Table 10**

| Sugarless Pellet Gums For Coating **EXAMPLES 117-122** | | | | | | |
|---|---|---|---|---|---|---|
| Example | 117 | 118 | 119 | 120 | 121 | 122 |
| Base Example # | 33 | 26 | 40 | 29 | 35 | 35 |
| Base % | 31.01 | 33.00 | 32.71 | 33.03 | 30.97 | 31.45 |
| Flavor | 1.20 (Spearmint Oil) | 1.30 (Peppermint Oil) | 1.09 (Spearmint Oil) | 1.50 (Fruit Flavor) | 1.01 (Peppermint Oil) | 1.31 (Fruit Flavor) |
| Flavor | | 0.50 (Menthol) | 0.17 (Peppermint Oil) | 0.50 (Lemon Flavor) | 0.21 (Spray Dried Menthol) | |
| Sorbitol | 51.46 | 44.06 | 45.56 | 43.81 | 46.69 | 45.99 |
| Calcium Carbonate | 10.01 | 13.00 | 12.16 | 12.93 | 13.04 | 13.33 |
| Glycerin | 6.14 | 8.00 | 8.00 | 7.98 | 7.82 | 7.30 |
| Encapsulated Aspartame | 0.12 | 0.14 | 0.21 | 0.25 | 0.18 | 0.62 |
| Free Aspartame | 0.06 | | 0.10 | | 0.08 | |
| TOTAL | 100 | 100 | 100 | 100 | 100 | 100 |

Inventive bubble gums may be prepared using the bubble gum bases of the present invention such as those listed in Examples 56-74. Illustrative formulations are given as Examples 123-134. Examples 123-128 are sugar bubble gum formulas. Note that Examples 124 and 128 use blends of two inventive bases. This is a technique to optimize processing and texture properties while minimizing the necessity of maintaining different bases for each product and without having additional custom bases compounded. Examples 129-134 are sugarless bubble gum formulas.

**Table 11**

| Sugar Bubble Gums **EXAMPLES 123-128** | | | | | | |
|---|---|---|---|---|---|---|
| Example | 123 | 124 | 125 | 126 | 127 | 128 |
| Base Example # | 69 | 72/74 | 74 | 72 | 59 | 72/69 |
| Base % | 24.02 | 11.00/11.00 | 22.20 | 20.01 | 19.99 | 9.00/13.00 |
| Flavor | 0.80 (Fruit Flavor) | 0.85 (Cream Soda) | 0.60 (Lemon Lime) | 0.60 (Blueberry) | 0.60 (Strawberry) | 0.80 (Cream Soda) |
| Flavor | | 0.03 (Vanilla) | | | | 0.02 (Vanilla) |
| Sugar | 55.10 | 59.54 | 55.95 | 59.00 | 59.75 | 57.98 |
| Corn Syrup* | 17.68 | 16.53 | 19.54 | 17.99 | 16.88 | 17.44 |
| Lecithin | 0.60 | 0.35 | 0.40 | 0.51 | 0.50 | 0.45 |
| Glycerin | 1.74 | 0.70 | 0.40 | 0.81 | 1.49 | 1.31 |
| Color | 0.06 (Red) | | 0.01 (Green) | 0.48 (Blue) | 0.08 (Red) | |
| Citric Acid | | | 0.90 | 0.60 | 0.70 | |
| TOTAL | 100 | 100 | 100 | 100 | 100 | 100 |

| | | | | | | |
|---|---|---|---|---|---|---|
| * Corn syrup may be high solids corn syrup, corn syrup solids, or may be partially substituted for by using glycerin coevaporated Lycasin. | | | | | | |

**Table 12**

| Sugarless Bubble Gums **EXAMPLES 129-134** | | | | | | |
|---|---|---|---|---|---|---|
| Example | 129 | 130 | 131 | 132 | 133 | 134 |
| Base Example # | 63 | 64 | 69 | 71 | 71 | 60 |
| Base % | 24.00 | 24.59 | 28.00 | 29.12 | 30.10 | 26.71 |
| Flavor | 1.20 (Fruit Flavor) | 1.41 (Fruit Flavor) | 1.71 (Grape Flavor) | 1.34 (Strawberry Flavor) | 1.11 (Lemon Flavor) | 1.23 (Peach Flavor) |
| Sorbitol | 40.0 | 51.88 | 46.03 | 44.54 | 46.39 | 49.33 |
| Calcium Carbonate | 5.00 | 4.31 | | | | |
| Talc | | | 3.71 | 3.44 | 1.99 | 3.44 |
| Lecithin | 1.00 | 0.91 | 0.84 | 0.61 | 0.86 | 0.75 |
| Citric Acid | | | | 0.31 | 0.31 | |
| Malic Acid | | | 0.21 | 0.11 | 0.31 | 0.16 |
| Tartaric Acid | | | 0.36 | 0.11 | | |
| Glycerin | 17.00 | 10.00 | 9.00 | 15.09 | 8.21 | 12.00 |
| Lycasin/Glycerin | 11.47 | 6.79 | 9.61 | 5.11 | 10.41 | 6.00 |
| Color | 0.02 (Red) | 0.01 (Red) | 0.06 (Red/Blue) | 0.02 (Red) | 0.05 (Yellow) | 0.01 (Red) |
| Encapsulated Aspartame | 0.27 | | 0.41 | | | 0.31 |
| Free Aspartame | 0.04 | | 0.06 | | 0.17 | 0.06 |
| Acesulfame K | | | | 0.11 | | |
| Encapsulated Alitame | | 0.10 | | | | |
| Sucralose | | | | 0.09 | 0.09 | |
| TOTAL | 100 | 100 | 100 | 100 | 100 | 100 |

### EXAMPLES 135-150

To demonstrate differences between gum formulas with wax and wax-free bases the following base formulas and gum formulas were made:

| | | | | | | |
|---|---|---|---|---|---|---|
| Example | 135 | 136 | 137 | 138 | 139 | 140 |

| Base Ingredients | | | | | | |
|---|---|---|---|---|---|---|
| Monocrystalline wax | 10.0 | --- | 13.0 | --- | 6.5 | --- |
| Styrene Butadiene | 2.1 | 2.1 | --- | --- | --- | --- |
| Isoprene/Isobutylene | 7.2 | 5.7 | --- | --- | --- | --- |
| Polyisobutylene | 7.4 | 8.9 | 7.0 | 7.9 | 10.8 | 11.9 |
| PVAC | 15.3 | 15.3 | 31.3 | 34.2 | 35.3 | 37.0 |
| Glycerol esterified Rosin | 19.1 | 19.1 | 13.0 | 14.8 | 18.5 | 20.3 |
| CaCO₃/talc* | 20.6 | 24.0 | 25.1 | 29.8 | 15.9* | 16.7* |
| Hydrogenated Vegetable Oil | 14.3 | 21.4 | --- | --- | --- | --- |
| Glycerol Monostearate | 4.0 | 3.5 | 5.9 | 5.0 | 7.7 | 4.5 |
| Glycerol triacetate | --- | --- | 4.7 | 5.3 | 5.3 | 5.7 |
| Acetylated Monoglycerides | --- | --- | | 3.0 | --- | 3.9 |

| | | | | | | |
|---|---|---|---|---|---|---|
| * indicates talc, no * indicates CaCo₃ | | | | | | |

The wax-free base formula for Example 136 is very similar to Example 15 previously shown. The wax-free base formula in Example 138 is the same formula shown previously as Example 69.

The wax-free base formula of Example 140 is the same formula shown previously as Example 74.

The gum bases of Examples 135 and 136 were each used to prepare sugar free gum products by the following formulas:

| | | | | |
|---|---|---|---|---|
| Example | 141 | 142 | 143 | 144 |
| Gum Base of Example | 135 | 136 | 135 | 136 |
| Base | 25.2 | 25.2 | 25.2 | 25.2 |
| Sorbitol | 48.32 | 48.32 | 48.46 | 48.46 |
| Coevaporated Lycosin/Glycerin | 9.3 | 9.3 | 9.3 | 9.3 |
| Mannitol | 8.0 | 8.0 | 8.0 | 8.0 |
| Glycerin | 7.4 | 7.4 | 7.4 | 7.4 |
| Peppermint Flavor | 1.4 | 1.4 | --- | --- |
| Spearmint Flavor | --- | --- | 1.3 | 1.3 |
| Lecithin | 0.13 | 0.13 | 0.13 | 0.13 |
| Encapsulated Aspartame | 0.25 | 0.25 | 0.21 | 0.21 |

After mixing, the gum loaves having the wax-free base were sheeted with less tempering, since they began to set up faster. Sheeting machine adjustments for extrusion temperature were higher and scoring rolls had to be reset in order to properly sheet and score the gum with wax-free base. Even though the gum was softer with wax-free base compared to gum made with wax base, a surface toughness was noted that allowed the gum to be more easily handled after sheeting and before wrapping. Because of this surface toughness, gum could be wrapped sooner after sheeting than could the gum made with wax base. Even though the wax-free gum was softer, it was just as easy to wrap as the wax containing gum.

To demonstrate differences in softness, Taber Stiffness data was taken 2 weeks after manufacture.

Results were:

| Taber Stiffness (average of 5 sticks) | |
|---|---|
| Example 141 | 56.8 |
| Example 142 | 41.0 |
| Example 143 | 54.2 |
| Example 144 | 32.2 |

Results show that a wax-free gum made with wax-free base gives a softer initial bite than gum made with base containing wax.

The Taber Stiffness is used to measure the stiffness of stick chewing gum. Chewing gum in the pellet form or chunk form, as is the case of most soft bubble gums, is measured for toughness using an Instron physical test. The Instron measures the force required for a probe to penetrate a piece of chunk gum to a depth of 2.54 mm. (0.1 inch). Instron data is expressed as work, in pounds-inches.

For Examples 145-146, bases of Examples 137 and 138 were used to make a chunk sugar bubble gum type fruit product according to the following formula.

| | | |
|---|---|---|
| Example | 145 | 146 |
| Base of Example | 137 | 138 |
| Base | 24.0 | 24.0 |
| Sugar | 55.04 | 55.04 |
| High maltose syrup | 17.7 | 17.7 |
| Glycerin | 1.8 | 1.8 |
| Fruit Flavor | 0.8 | 0.8 |
| Lecithin | 0.6 | 0.6 |
| Color | 0.06 | 0.06 |
| Instron work, pound-inches | 0.100 | 0.0492 |

For Examples 147-150, the bases of Examples 139-140 were used to make a chunk sugar bubble gum having tart flavors according to the following formulas:

| | | | | |
|---|---|---|---|---|
| Example | Example 147 | Example 148 | Example 149 | Example 150 |
| Base of Example | 139 | 140 | 139 | 140 |
| Base | 22.2 | 22.2 | 20.0 | 20.0 |
| Sugar | 55.99 | 55.99 | 56.95 | 56.95 |
| High maltose syrup | 19.5 | 19.5 | 20.0 | 20.0 |
| Glycerin | 0.4 | 0.4 | 1.0 | 1.0 |
| Lecithin | 0.4 | 0.4 | 0.5 | 0.5 |
| Lemon Flavor | 0.6 | 0.6 | --- | --- |
| Blueberry Flavor | --- | --- | 0.6 | 0.6 |
| Citric acid | 0.9 | 0.9 | 0.6 | 0.6 |
| Color | 0.01 | 0.01 | 0.35 | 0.35 |
| Instron, pound-inches | 0.235 | 0.056 | .0437 | .0224 |

As shown by the Instron data, Examples 146, 148 and 150 made with wax-free bases have a lower value and thus have a softer initial bite than does a comparable gum made with wax containing base even though the gum formulations are the same.

While the gums of our invention are described above, in terms of their ingredients, the inventive gums also are defined in terms of initial soft bite, and preferably also in terms of toughness. Initial soft bite can be related to Taber Stiffness for stick gum and toughness of pellet or chunk gum can be related to Instron data.

The preferred chewing gum formulated with the elastomer blends above described, and with the sweeteners, bulking agents, and binders, and particularly with the water soluble/dispersible softeners which can be added during chewing gum mixing, also have a Taber Stiffness from 15 to 55 Taber Units. The gums may also have an Instron yield of from 0.00023 kg/m. (0.02) to 0.00092 kg/m (0.08 pound-inches). Whatever values of Taber Stiffness or Instron yields, the new wax-free gums are at least 5 percent, and often from 10 to 40 percent softer than comparable wax containing gums.

## Claims

1. A chewing gum free of mineral hydrocarbon wax which also contains no more than 5% natural wax having an initial soft bite comprising from 5 to 35 wt% gum base which gum base comprises:
from 20 to 60 wt% of a blend of at least two synthetic elastomers;
from 0 to 30 wt% of at least one natural elastomer;
from 5 to 55 wt% of at least one elastomer plasticizer;
from 4 to 40 wt% filler; and
from 5 to 40 wt% of at least one softener at least one of which shall be hydrogenated or partially hydrogenated vegetable oil or a mixture of hydrogenated and partially hydrogenated vegetable oils,
said chewing gum also having a Taber Stiffness at least 5 percent less than the Taber Stiffness of a comparable wax containing gum.

2. A chewing gum as claimed in claim 1 including no wax.

3. A chewing gum as claimed in claim l or claim 2 wherein addditional softener is selected from the group consisting of tallow, hydrogenated tallow, cocoa butter, glyercol monostearate, mono-, di- and triglycerides, acetylated monoglycerides, glycerol diacetate, glycerol triacetate, lecithin, fatty acids, lanolin, and combinations thereof.

4. A chewing gum as claimed in any one of claims1 to 3 wherein the softener is one or more hydrogenated vegetable oils and glycerol monostearate, triacetin, lecithin, or a combination thereof.

5. A chewing gum as claimed in any one of claims 1 to 3, wherein the softener is one or more hydrogenated vegetable oils and glycerol monostearate, acetylated monoglyceride, glycerol triacetate, or a combination thereof.

6. A chewing gum as claimed in any one of claims l to 5, wherein the natural elastomer is selected from the group consisting of jelutong, lechi caspi, perillo, sorva, massaranduba balata, massaranduba chocolate, nispero, rosin dinha, chicle, gutta hang kang, smoked or liquid latex, guayule, chiquibul, crown gum, pendare, venezuelau chicle, leche de vaca, niger gutta, tunu, chilte, and combinations thereof.

7. A chewing gum as claimed in any one of claims 1 to 5 wherein the natural elastomer is selected from the group consisting of jelutong, sorva, chicle, massaranduba balata, and combinations thereof.

8. A chewing gum as claimed in any one of claims l to 7, wherein the synthetic elastomers are selected from at least two of the group consisting of polyisobutylene, polyisoprene, isobutylene-isoprene copolymer, butadiene-styrene copolymer, polyvirylacetate, vinyl acetate-vinyl laurate copolymer.

9. A chewing gum as claimed in any one of claims 1 to 7 wherein the synthetic elastomers are selected from at least two elastomers from the group styrene-butadiene copolymer, polyisobutylene elastomer, isobutylene-isoprene copolymer, and polyvinylacetate.

10. A chewing gum as claimed in any one of claims l to 9, wherein the elastomer plasticizer is selected from the group consisting of glycerol esters of rosin, glycerol esters of partially hydrogenated rosin, glycerol esters of polymerized rosin, glycerol esters of partially dimerized rosin, partially hydrogenated methyl esters of rosin, glycerol esters of tall oil rosin, pentaerythritol esters of rosin, methyl esters of rosin, pentaerythritol esters of partially hydrogenated rosin, synthetic terpene resin, natural terpene resin, and combinations thereof.

11. A chewing gum as claimed in any one of claims 1 to 9 wherein the elastomer plasticizer is selected from the group consisting of glycerol esters of partially hydrogenated rosin, methyl esters of rosin, glycerol esters of rosin, terpene resin, and combinations thereof.

12. A chewing gum as claimed in any one of claims 1 to 9 wherein the elastomer plasticizer is selected from the group consisting of glycerol ester of wood rosin, glycerol ester of partially hydrogenated wood rosin, terpene resins and combinations thereof.

13. A chewing gum as claimed in any one of claims l to 12, wherein the filler is selected from the group consisting of calcium carbonate, magnesium carbonate, talc, ground limestone, magnesium silicate, aluminum silicate, clay, alumina, titanium dioxide, mono-, diand tri-calcium phosphates, cellulose, and combinations thereof.

14. A wax-free chewing gum as claimed in any one of claims 1 to 12 wherein the filler is selected from the group consisting of calcium carbonate, talc, and combinations thereof.

15. A chewing gum as claimed in any one of claims l to 14, comprising:
from 25 to 45 wt% of a blend of at least two synthetic elastomers;
from 10 to 40 wt% elastomer plasticizer;
from 5 to 30 wt% filler; and
from 15 to 35 wt% softener.

16. A chewing gum as claimed in any one of claims 1 to 14, comprising:
from 30 to 60 wt% of a blend of at least two synthetic elastomers;
from 5 to 55 wt% elastomer plasticizer;
from 10 to 35 wt% filler; and
from 5 to 25 wt% softener.

17. A chewing gum as claimed in any one of claims 1 to 14, comprising:
from 12 to 30 wt% natural elastomer;
from 20 to 40 wt% of a blend of at least two synthetic elastomers;
from 5 to 25 wt% elastomer plasticizer;
from 4 to 25 wt% filler; and
from 15 to 30 wt% softener.

18. A chewing gum as claimed in any one of claims 1 to 17, prepared by:
adding a first portion of at least one of the synthetic elastomers and a first portion of filler to a mixer;
adding softener to the mixer along with a second portion of the remaining synthetic elastomer and a first portion of at least one other synthetic elastomer and a second portion of filler;
adding elastomer plasticizer to the mixer along with a third portion of the remaining synthetic elastomer and a third portion of filler;
blending the ingredients together; and
removing heat at from 30 minutes to 90 minutes into the mixing time of the base production process, and then completing mixing and sequentially adding, in any order, water soluble sweeteners, bulking agents, binders and water soluble/dispersible softeners, and flavoring agents, and mixing to form a chewing gum mixture, and then forming the mixture into a gum loaf, tempering the loaf at from 35 to 45°C and from 65 to 75% relative humidity for from lO to 30 minutes to form a tempered loaf,
extruding the tempered loaf in an extruder having an exit temperature of from 55 to 65°C to form a continuous gum ribbon, and
processing said ribbon by reducing its thickness, scoring and cutting to form gum sheets, and
tempering said sheets for from 6 to 24 hours, and then breaking said sheets into gum pieces and wrapping the pieces.

19. A chewing gum as claimed in any one of claims 1 to 18 having a Taber Stiffness of from 15 to 55 Taber Units and an Instron yield of from 0.00023 to 0.00092 kg/m (0.02 to 0.08 pound-inches).

20. A chewing gum as claimed in any one of claims 1 to 14, 18 and 19 having reduced tack and soft initial bite properties, comprising:
a water soluble bulk portion;
one or more flavoring agents; and
a water insoluble chewing gum base consisting primarily of 20 to 60 wt% of a blend of at least two synthetic elastomers, lO to 40 wt% elastomer plasticizer, 5 to 30 wt% filler, and 15 to 35 wt% softener, by weight of the gum base, said chewing gum having a Taber Stiffness at least 5 percent lower than that of a comparable wax containing gum.

21. A chewing gum, as claimed in any one of claims 1 to 14, comprising:
a water soluble bulk portion;
one or more flavoring agents; and
wherein said chewing gum base is water insoluble and consists primarily of from 12 to 30 wt% natural elastomers, from 20 to 40 wt% of at least two synthetic elastomers, from 5 to 25 wt% elastomer plasticizer, from 4 to 25 wt% filler, and from 15 to 30 wt% softener, by weight of the chewing gum base, said chewing gum having a Taber Stiffness ranging from 15 to 55, and an Instron data of from 0.00023 to 0.00092 kg/m (0.02 to 0.08 pound-inches).

22. A chewing gum as claimed in any one of claims 1 to 14 having an initial soft bite, comprising:
a water soluble bulk portion;
one or more flavoring agents; and
wherein said chewing gum base is water insoluble and consists primarily of from 20 to 60 wt% of a blend of at least two synthetic elastomers, from 10 to 50 wt% elastomer plasticizer, from l0 to 40 wt% filler, and from 5 to 40 wt% softener, said chewing gum having an initial soft bite, a Taber Stiffness of from 15 to 55 Taber Units and an Instron yield of from 0.00023 to 0.00092 kg/m (0.02 to 0.08 pound-inches), and further wherein the water soluble bulk portion comprises from O.l to 15 wt%, based on total chewing gum, of a water soluble/dispersible softener.

23. A chewing gum as claimed in any one of claims 1 to 22, wherein the blend of elastomers contains at least three elastomers.

24. A chewing gum as claimed in any one of claims 1 to 14 having a soft initial bite, comprising gum base, flavor and sweetener; said gum base comprising: from 5 to 40 wt% of at least two softeners, said chewing gum having both a Taber Stiffness and an Instron yield at least 5 percent less than a comparable wax containing gum, said chewing gum further comprising at least one binding agent selected from corn syrup, hydrogenated starch hydrolyzate, coevaporated Lycasin, or mixtures thereof.

25. A rapid setting wax-free chewing gum as claimed in any one of claims 1 to 14 having an initial soft bite as measured by having a Taber Stiffness ranging from 15 to 55, and being at least 5 percent less than the Taber Stiffness of a comparable wax gum and further wherein the chewing gum comprises a gum base which comprises:
| Ingredlent | Wt. % gum base |
|---|---|
| at least two synthetic elastomers | from 20 to 60 |
| at least one elastomer plasticizer | from 5 to 55 |
| at least one filler | from 4 to 40 |
| at least one softener | from 5 to 40 |

26. A chewing gum as claimed in any one of claims 1 to 25, wherein the gum has reduced tack to dental surfaces.

27. A chewing gum as claimed in any one of claims 1 to 26, wherein the gum is in the form of a coated pellet or ball.

28. A chewing gum as claimed in any one of claims 1 to 27, wherein the gum is a bubble gum.

29. A chewing gum as claimed in any one of claims 1 to 28, wherein the gum is sugarless.

30. A chewing gum as claimed in any one of claims 1 to 29, wherein the water soluble bulk portion further comprises sweeteners selected from the group consisting of low intensity sweeteners, high intensity sweeteners, and mixtures thereof.

## Patentansprüche

1. Ein Kaugummi mit einem anfänglichen weichen Biß, das kein anorganisches Kohlenwasserstoffwachs enthält und außerdem nicht mehr als 5% natürliches Wachs, das 5 bis 35 Gew.-%, Gumbasis enthält, wobei die Gumbasis folgende Stoffe enthält:
20 bis 60 Gew.-% einer Mischung von mindestens zwei synthetischen Elastomeren;
0 bis 30 Gew.-% von mindestens einem natürlichen Elastomer;
5 bis 55 Gew.-% von mindestens einem elastomeren Weichmacher;
4 bis 40 Gew.-% Füllstoff; und
5 bis 40 Gew.-% von mindestens einem Erweichungsmittel,
von dem mindestens eines hydriertes oder teilhydriertes pflanzliches Öl oder eine Mischung von hydriertem und teilhydriertem planzlichen Ölen ist,
wobei das Kaugummi außerdem eine Taber-Steife aufweist, die wenigstens 5% geringer ist als die Taber-Steife eines vergleichbaren Wachs-enthaltenden Gums.

2. Kaugummi gemäß Anspruch 1, das kein Wachs enthält.

3. Kaugummi gemäß Anspruch 1 oder 2, wobei ein zusätzliches Erweichungsmittel aus der Gruppe, umfassend Talk, hydrierten Talk, Kakaobutter, Glycerinmonostearat, Mono-, Di- und Triglyceride, acetylierte Monoglyceride, Glycerindiacetat, Glycerintriacetat, Lecithin, Fettsäuren, Lanolin und Kombinationen daraus ausgewählt ist.

4. Kaugummi gemäß einem oder mehreren der Ansprüche 1 bis 3, wobei das Erweichungsmittel ein oder mehrere hydrierte pflanzliche Öle und Glycerinmonostearat, Triacetin, Lecithin oder eine Kombination davon ist.

5. Kaugummi gemäß einem oder mehreren der Ansprüche 1 bis 3, wobei das Erweichungsmittel ein oder mehrere hydrierte pflanzliche Öle und Glycerinmonostearat, acetyliertes Monoglycerid, Glycerintriacetat oder eine Kombination davon ist.

6. Kaugummi gemäß einem oder mehreren der Ansprüche 1 bis 5, wobei das natürliche Elastomer aus der Gruppe, bestehend aus Jelutong, Lechi Caspi, Perillo, Sorva, Massaranduba Balata, Massaranduba Chocolate, Nispero, Rosindinha, Chicle, Gutta Hang Kang, smoked oder flüssiges Latex, Guayule, Chiquibul, Crown gum, Pendare, Venezuelau Chicle, Leche de Vaca, Niger Gutta, Tunu, Chilte und Kombinationen davon ausgewählt ist.

7. Kaugummi gemäß einem oder mehreren der Ansprüche 1 bis 5, wobei das natürliche Elastomer aus der Gruppe, bestehend aus Jelutong, Sorva, Chicle, Massaranduba Balata und Kombinationen davon ausgewählt ist.

8. Kaugummi gemäß einem oder mehreren der Ansprüche 1 bis 7, wobei die synthetischen Elastomere aus mindestens zwei, ausgewählt aus der Gruppe, bestehend aus Polyisobutylen, Polyisopren, Isobutylen-Isopren-Copolymer, Butadien-Styrol-Copolymer, Polyvinylacetat, Vinylacetat-Vinyllaurat-Copolymer ausgewählt sind.

9. Kaugummi gemäß einem oder mehreren der Ansprüche 1 bis 7, wobei die synthetischen Elastomere aus mindestens zwei Elastomeren der Gruppe bestehend aus Styrol-Butadien-Copolymer, Polyisobutylen-Elastomer, Isobutylen-Isopren-Copolymer und Polyvinylacetat ausgewählt sind.

10. Kaugummi gemäß einem oder mehreren der Ansprüche 1 bis 9, wobei der elastomere Weichmacher ausgewählt ist aus der Gruppe, bestehend aus Glycerinestern von Kolophonium, Glycerinestern von teilweise hydriertem Kolophonium, Glycerinestern von polymerisiertem Kolophonium, Glycerinestern von teilweise dimerisiertem Kolophonium, teilweise hydrierten Methylestern von Kolophonium, Glycerinestern von Tallöl-Kolophonium, Pentaerythritol-Estern von Kolophonium, Methylestern von Kolophonium, Pentaerythritol-Estern von teilweise hydriertem Kolophonium, synthetischem Terpenharz, natürlichem Terpenharz und Kombinationen davon.

11. Kaugummi gemäß einem oder mehreren der Ansprüche 1 bis 9, wobei der elastomere Weichmacher aus der Gruppe, bestehend aus Glycerinestern von teilweise hydriertem Kolophonium, Methylestern von Kolophonium, Glycerinestern von Kolophonium, Terpenharz und Kombinationen davon ausgewählt ist.

12. Kaugummi gemäß einem oder mehreren der Ansprüche 1 bis 9, wobei der elastomere Weichmacher aus der Gruppe, bestehend aus Glyerinester von Holzkolophonium, Glycerinester von teilweise hydriertem Holzkolophonium, Terpenharzen und Kombinationen davon ausgewählt ist.

13. Kaugummi gemäß einem oder mehreren der Ansprüche 1 bis 12, wobei der Füllstoff aus der Gruppe, bestehend aus Calciumcarbonat, Magnesiumcarbonat, Talk, gemahlenem Kalkstein, Magnesiumsilicat, Aluminiumsilicat, Ton, Aluminiumoxid, Titaniumdioxid, Mono-, Di- und Tricalciumphosphaten, Cellulose und Kombinationen daraus ausgewählt wird.

14. Wachsfreies Kaugummi gemäß einem oder mehreren der Ansprüche 1 bis 12, wobei der Füllstoff aus der Gruppe, bestehend aus Calciumcarbonat, Talk und Kombinationen davon ausgewählt ist.

15. Kaugummi gemäß einem oder mehreren der Ansprüche 1 bis 14, enthaltend:
25 bis 45 Gew.-% einer Mischung von mindestens zwei synthetischen Elastomeren;
10 bis 40 Gew.-% elastomeren Weichmacher;
5 bis 30 Gew.-% Füllstoff; und
15 bis 35 Gew.-% Erweichungsmittel.

16. Kaugummi gemäß einem oder mehreren der Ansprüche 1 bis 14, enthaltend:
30 bis 60 Gew.-% einer Mischung von mindestens zwei synthetischen Elastomeren;
5 bis 55 Gew.-% elastomeren Weichmacher;
10 bis 35 Gew.-% Füllstoff; und
5 bis 25 Gew.-% Erweichungsmittel.

17. Kaugummi gemäß einem oder mehreren der Ansprüche 1 bis 14, enthaltend:
12 bis 30 Gew.-% natürliches Elastomer;
20 bis 40 Gew.-% einer Mischung von mindestens zwei synthetischen Elastomeren;
5 bis 25 Gew.-% elastomeren Weichmacher;
4 bis 25 Gew.-% Füllstoff; und
15 bis 30 Gew.-% Erweichungsmittel.

18. Kaugummi gemäß einem oder mehreren der Ansprüche 1 bis 17, hergestellt durch:
Hinzufügen eines ersten Teils von mindestens einem der synthetischen Elastomere und eines ersten Teils des Füllstoffs zu einer Mischvorrichtung;
Hinzufügen des Erweichungsmittels zu der Mischvorrichtung zusammen mit einem zweiten Teil des übriggebliebenen synthetischen Elastomers und eines ersten Teils von mindestens einem anderen synthetischen Elastomer und eines zweiten Teils des Füllstoffs;
Hinzufügen des elastomeren Weichmachers zu der Mischvorrichtung zusammen mit einem dritten Teil des übriggebliebenen synthetischen Elastomers und einem dritten Teil des Füllstoffs;
Vermischen der Zutaten miteinander; und
Ableiten von Hitze nach 30 Minuten bis 90 Minuten der Mischzeit des zugrundeliegenden Produktionsprozesses und darauffolgend eine Komplettierung der Vermischung und das schrittweise Zufügen, in beliebiger Reihenfolge, von wasserlöslichen Süßstoffen, Massebildnern, Bindestoffen und wasserlöslichen/dispergierbaren Erweichungsmitteln und Geschmacksstoffen und Vermischen, um eine Kaugummimischung zu bilden und anschließende Formung der Mischung in ein Stück Gum, Härten des Stücks bei 35 bis 45°C und 65 bis 75% relativer Feuchtigkeit für 10 bis 30 Minuten um ein gehärtetes Stück zu erhalten,
Extrusion des gehärteten Stücks in einem Extruder mit einer Ausgangstemperatur von 55 bis 65°C um ein kontinuierliches Gumband zu bilden und
Verarbeitung dieses Bandes, indem seine Dicke reduziert wird, Kerben und Schneiden, um Gumschichten zu bilden und
Härten dieser Schichten für 6 bis 24 Stunden und dann das Brechen dieser Schichten in Gumstücke und das Einwickeln dieser Stücke.

19. Kaugummi gemäß einem oder mehreren der Ansprüche 1 bis 18, mit einer Taber-Steife von 15 bis 55 Taber-Einheiten und einem Instron-Ertrag von 0,00023 bis 0,00092 kg/m (0,02 bis 0,08 pound-inches).

20. Kaugummi gemäß einem oder mehreren der Ansprüche 1 bis 14, 18 und 19 mit reduzierter Klebrigkeit und anfänglichen Weichbißeigenschaften, enthaltend:
einen wasserlöslichen Masseteil;
ein oder mehrere Geschmacksmittel; und
eine wasserunlösliche Kaugummibasis, die vor allem aus 20 bis 60 Gew.-% einer Mischung von mindestens zwei synthetischen Elastomeren, 10 bis 40 Gew.-% elastomeren Weichmacher, 5 bis 30 Gew.-% Füllstoff und 15 bis 35 Gew.-% Erweichungsmittel pro Gewicht der Gumbasis besteht, wobei das Kaugummi eine Taber-Steife aufweist, die mindestens 5% geringer ist als die eines vergleichbaren Wachs-enthaltenden Gums.

21. Kaugummi gemäß einem oder mehreren der Ansprüche 1 bis 14, enthaltend:
einen wasserlöslichen Masseteil;
ein oder mehrere Geschmacksstoffe; und
wobei die Kaugummigrundmasse wasserunlöslich ist und im wesentlichen aus 12 bis 30 Gew.-% natürlicher Elastomere, 20 bis 40 Gew.-% von mindestens zwei synthetischen Elastomeren, 5 bis 25 Gew.-% elastomeren Weichmacher, 4 bis 25 Gew.-% Füllstoff und 15 bis 30 Gew.-% Erweichungsmittel pro Gewicht der Kaugummigrundmasse besteht, wobei das Kaugummi eine Taber-Steife von 15 bis 55 aufweist und Instrondaten von 0,00023 bis 0,00092 kg/m (0,02 bis 0,08 pound-inches).

22. Kaugummi gemäß einem oder mehreren der Ansprüche 1 bis 14, mit einem anfänglichen weichen Biß, enthaltend:
einen wasserlöslichen Masseteil;
ein oder mehrere Geschmacksstoffe; und
wobei die Kaugummigrundmasse wasserunlöslich ist und im wesentlichen aus 20 bis 60 Gew.-% einer Mischung von mindestens zwei synthetischen Elastomeren, 10 bis 50 Gew.-% elastomeren Weichmacher, 10 bis 40 Gew.-% Füllstoff und 5 bis 40 Gew.-% Erweichungsmittel besteht, wobei das Kaugummi einen anfänglichen weichen Biß hat, eine Taber-Steife von 15 bis 55 Taber-Einheiten und einen Instronertrag von 0,00023 bis 0,00092 kg/m (0,02 bis 0,08 pound-inches), und wobei weiterhin der wasserlösliche Masseteil 0,1 bis 15 Gew.-%, basierend auf dem Gesamtkaugummi, eines wasserlöslichen/dispergierbaren Erweichungsmittels enthält.

23. Kaugummi gemäß einem oder mehreren der Ansprüche 1 bis 22, wobei die Mischung von Elastomeren mindestens drei Elastomere enthält.

24. Kaugummi gemäß einem oder mehreren der Ansprüche 1 bis 14, mit einem anfänglichen weichen Biß, enthaltend Gumbasis, Geschmack und Süßstoff; wobei die Gumbasis folgendes enthält: 5 bis 40 Gew.-% von mindestens zwei Erweichungsmitteln, wobei das Kaugummi sowohl eine Taber-Steife als auch einen Instronertrag aufweist, der 5% geringer ist als der eines vergleichbaren Wachs-enthaltenden Gums, wobei das Kaugummi weiterhin mindestens ein Bindemittel enthält, ausgewählt aus der Gruppe Maissirup, hydriertes Stärkehydrolysat, coevaporiertes Lycasin oder Mischungen davon.

25. Ein schnell festwerdendes wachsfreies Kaugummi gemäß einem oder mehreren der Ansprüche 1 bis 14 mit einem anfänglichen weichen Biß, wie gemessen durch eine Taber-Steife im Bereich von 15 bis 55, wobei diese wenigstens 5% geringer ist als die Taber-Steife von einem vergleichbaren Wachsgummi und wobei das Kaugummi weiterhin eine Gumbasis enthält, die folgendes enthält:
| Zutat | Gew.-% Gumbasis |
|---|---|
| mindestens zwei synthetische Elastomere | 20 bis 60 |
| mindestens einen elastomeren Weichmacher | 5 bis 55 |
| mindestens einen Füllstoff | 4 bis 40 |
| mindestens ein Erweichungsmittel | 5 bis 40 |

26. Kaugummi gemäß einem oder mehreren der Ansprüche 1 bis 25, wobei das Gum weniger an Zahnoberflächen klebt.

27. Kaugummi gemäß einem oder mehreren der Ansprüche 1 bis 26, wobei das Gum die Form eines beschichteten Pellets oder Balls aufweist.

28. Kaugummi gemäß einem oder mehreren der Ansprüche 1 bis 27, wobei das Gum ein Bubble Gum ist.

29. Kaugummi gemäß einem oder mehreren der Ansprüche 1 bis 28, wobei das Gum keinen Zucker enthält.

30. Kaugummi gemäß einem oder mehreren der Ansprüche 1 bis 29, wobei der wasserlösliche Masseteil weiterhin Süßstoffe enthält, ausgewählt aus der Gruppe, bestehend aus schwach intensiven Süßstoffen, stark intensiven Süßstoffen und Mischungen davon.

## Revendications

1. Gomme à mâcher dépourvue de cire hydrocarbonée minérale et qui, en outre, ne contient pas plus de 5 % de cire naturelle et est molle dès le départ, comprenant de 5 à 35 % en poids d'une base de gomme comprenant :
de 20 à 60 % en poids d'un mélange d'au moins deux élastomères synthétiques ;
de 0 à 30 % en poids d'au moins un élastomère naturel ;
de 5 à 55 % en poids d'au moins un plastifiant d'élastomère ;
de 4 à 40 % en poids de charge ; et
de 5 à 40 % en poids d'au moins un émollient, dont au moins un sera une huile végétale hydrogénée ou partiellement hydrogénée, ou un mélange d'huiles végétales hydrogénées et d'huiles végétales partiellement hydrogénées,
ladite gomme à mâcher ayant aussi une rigidité Taber inférieure d'au moins 5 % à la rigidité Taber d'une gomme comparable contenant une cire.

2. Gomme à mâcher selon la revendication 1, ne contenant pas de cire.

3. Gomme à mâcher selon la revendication 1 ou la revendication 2, contenant un émollient supplémentaire choisi dans le groupe constitué par le suif, le suif hydrogéné, le beurre de cacao, le monostéarate de glycérol, les mono-, di- et triglycérides, les monoglycérides acétylés, le diacétate de glycérol, le triacétate de glycérol, la lécithine, les acides gras, la lanoline, ainsi que leurs combinaisons.

4. Gomme à mâcher selon l'une quelconque des revendications 1 à 3, dans laquelle l'émollient est constitué d'une ou plusieurs huiles végétales hydrogénées et de monostéarate de glycérol, de triacétine, de lécithine ou d'une combinaison de ceux-ci.

5. Gomme à mâcher selon l'une quelconque des revendications 1 à 3, dans laquelle l'émollient est constitué d'une ou plusieurs huiles végétales hydrogénées et de monostéarate de glycérol, d'un monoglycéride acétylé, de triacétate de glycérol ou d'une combinaison de ceux-ci.

6. Gomme à mâcher selon l'une quelconque des revendications 1 à 5, dans laquelle l'élastomère naturel est choisi dans le groupe constitué par les matériaux connus sous les noms de jelutong, lechi caspi, perillo, sorva, massaranduba balata, massaranduba chocolate, nispero, rosin dinha, chicle, gutta hang kang, latex fumé ou liquide, guayule, chiquibul, crown gum, pendare, chicle vénézuela, leche de vaca, niger gutta, tunu, chilte, ainsi que des combinaisons de ceux-ci.

7. Gomme à mâcher selon l'une quelconque des revendications 1 à 5, dans laquelle l'élastomère naturel est choisi dans le groupe constitué par les matériaux connus sous les noms de jellutong, sorva, chicle, massaranduba balata, et des combinaisons de ceux-ci.

8. Gomme à mâcher selon l'une quelconque des revendications 1 à 7, dans laquelle les élastomères synthétiques sont choisis parmi au moins deux élastomères du groupe constitué par le polyisobutène, le polyisoprène, un copolymère d'isobutylène-isoprène, un copolymère de butadiène-styrène, l'acétate de polyvinyle et un copolymère d'acétate de vinyle-laurate de vinyle.

9. Gomme à mâcher selon l'une quelconque des revendications 1 à 7, dans laquelle les élastomères synthétiques sont choisis parmi au moins deux élastomères du groupe constitué par un copolymère de styrène-butadiène, un élastomère de polyisobutylène, un copolymère d'isobutylène-isoprène et l'acétate de polyvinyle.

10. Gomme à mâcher selon l'une quelconque des revendications 1 à 7, dans laquelle le plastifiant d'élastomère est choisi dans le groupe constitué par les esters de glycérol et de colophane, les esters de glycérol et de colophane partiellement hydrogénée, les esters de glycérol et de colophane polymérisée, les esters de glycérol et de colophane partiellement dimérisée, les esters méthyliques de colophane partiellement hydrogénés, les esters de glycérol et de colophane de tallol, les esters de pentaérythritol et de colophane, les esters méthyliques de colophane, les esters de pentaérythritol et de colophane partiellement hydrogénée, les résines terpéniques synthétiques, les résines terpéniques naturelles, et des combinaisons de ceux-ci.

11. Gomme à mâcher selon l'une quelconque des revendications 1 à 9, dans laquelle le plastifiant d'élastomère est choisi dans le groupe constitué par les esters de glycérol et de colophane partiellement hydrogénée, les résines terpéniques et des combinaisons de ceux-ci.

12. Gomme à mâcher selon l'une quelconque des revendications 1 à 9, dans laquelle le plastifiant d'élastomère est choisi dans le groupe constitué par l'ester de glycérol et de résine de térébenthine, l'ester de glycérol et de résine de térébenthine partiellement hydrogénée, les résines terpéniques et des combinaisons de ceux-ci.

13. Gomme à mâcher selon l'une quelconque des revendications 1 à 12, dans laquelle la charge est choisie dans le groupe constitué par le carbonate de calcium, le carbonate de magnésium, le talc, le calcaire broyé, le silicate de magnésium, le silicate d'aluminium, l'argile, l'alumine, le dioxyde de titane, les phosphates mono-, di- et tricalcique, la cellulose, et des combinaisons de ceux-ci.

14. Gomme à mâcher sans cire selon l'une quelconque des revendications 1 à 12, dans laquelle la charge est choisie dans le groupe constitué par le carbonate de calcium, le talc et des combinaisons de ceux-ci.

15. Gomme à mâcher selon l'une quelconque des revendications 1 à 14, comprenant :
de 25 à 45 % en poids d'un mélange d'au moins deux élastomères synthétiques ;
de 10 à 40 % en poids de plastifiant d'élastomère ;
de 5 à 30 % en poids de charge ; et
de 15 à 35 % en poids d'émollient.

16. Gomme à mâcher selon l'une quelconque des revendications 1 à 14, comprenant :
de 30 à 60 % en poids d'un mélange d'au moins deux élastomères synthétiques ;
de 5 à 55 % en poids de plastifiant d'élastomère ;
de 10 à 35 % en poids de charge ; et
de 5 à 25 % en poids d'émollient.

17. Gomme à mâcher selon l'une quelconque des revendications 1 à 14, comprenant :
de 12 à 30 % en poids d'élastomère naturel ;
de 20 à 40 % en poids d'un mélange d'au moins deux élastomères synthétiques ;
de 5 à 25 % en poids de plastifiant d'élastomère ;
de 4 à 25 % en poids de charge ; et
de 15 à 30 % en poids d'émollient.

18. Gomme à mâcher selon l'une quelconque des revendications 1 à 17, qu'on prépare en :
ajoutant une première partie d'au moins un des élastomères synthétiques et une première partie de charge dans un mélangeur ;
ajoutant un émollient dans le mélangeur, en même temps qu'une deuxième partie de l'élastomère synthétique restant et une première partie d'au moins un autre élastomère synthétique et une deuxième partie de charge ;
ajoutant un plastifiant d'élastomère dans le mélangeur, en même temps qu'une troisième partie de l'élastomère synthétique restant et une troisième partie de charge ;
mélangeant ensemble ces ingrédients ; et
éliminant la chaleur au bout de 30 minutes à 90 minutes pendant le temps de mixtion du procédé de préparation de la base, et ensuite, complétant l'opération de mixtion et ajoutant successivement, dans n'importe quel ordre, des édulcorants solubles dans l'eau, des agents de charge, des liants et des émollients solubles/dispersibles dans l'eau, et des agents aromatisants, mélangeant le tout pour former un mélange de gomme à mâcher, puis façonnant ce mélange en un gâteau de gomme, recuisant ce gâteau à une température de 35 à 45°C et à un taux d'humidité relative de 65 à 75 %, pendant 10 à 30 minutes, pour former un gâteau recuit,
extrudant le gâteau recuit dans une extrudeuse ayant une température de sortie de 55 à 65°C, pour former un ruban continu de gomme, et
traitant ledit ruban par réduction de son épaisseur, striation et découpe pour former des feuilles de gomme, et
recuisant lesdites feuilles pendant 6 à 24 heures et ensuite, découpant lesdites feuilles en morceaux de gomme et emballant lesdits morceaux.

19. Gomme à mâcher selon l'une quelconque des revendications 1 à 18, ayant une dureté Taber de 15 à 55 unités Taber et une valeur Instron de 0,00023 à 0,00092 kg/m (0,02 à 0,08 livre-pouce).

20. Gomme à mâcher selon l'une quelconque des revendications 1 à 14, 18 et 19, ayant des propriétés de pégosité réduite et étant initialement molle, comprenant :
une partie charge soluble dans l'eau ;
un ou plusieurs agents aromatisants ; et
une base de gomme à mâcher insoluble dans l'eau, constituée essentiellement de 20 à 60 % en poids d'un mélange d'au moins deux élastomères synthétiques, 10 à 40 % de plastifiant d'élastomère, 5 à 30 % en poids de charge et 15 à 35 % d'émollient, par rapport au poids de la base de gomme, ladite gomme à mâcher ayant une rigidité Taber inférieure d'au moins 5 % à celle d'une gomme comparable contenant une cire.

21. Gomme à mâcher selon l'une quelconque des revendications 1 à 14, comprenant :
une partie charge soluble dans l'eau ;
un ou plusieurs agents aromatisants ; et
dans laquelle ladite base de gomme à mâcher est insoluble dans l'eau et est constituée essentiellement de 12 à 30 % en poids d'élastomères naturels, de 20 à 40 % en poids d'au moins deux élastomères synthétiques, de 5 à 25 % en poids de plastifiant d'élastomère, de 4 à 25 % en poids de charge et de 15 à 30 % en poids d'émollient, par rapport au poids de la base de gomme, ladite gomme à mâcher ayant une rigidité Taber comprise entre 15 et 55 et une valeur Instron de 0,00023 à 0,00092 kg/m (0,02 à 0,08 livre-pouce).

22. Gomme à mâcher selon l'une quelconque des revendications 1 à 14, molle dès le départ, comprenant :
une partie charge soluble dans l'eau ;
un ou plusieurs agents aromatisants ; et
dans laquelle ladite base de gomme à mâcher est insoluble dans l'eau et est constituée essentiellement de 20 à 60 % en poids d'un mélange d'au moins deux élastomères synthétiques, de 10 à 50 % en poids de plastifiant d'élastomère, de 10 à 40 % en poids de charge et de 5 à 40 % en poids d'émollient, ladite gomme à mâcher étant molle dès le départ, ayant une rigidité Taber de 15 à 55 unités Taber et une valeur Instron de 0,00023 à 0,00092 kg/m (0,02 à 0,08 livre-pouce), et dans laquelle, en outre, la partie charge soluble dans l'eau comprend de 0,1 à 15 % en poids d'un émollient soluble/dispersible dans l'eau, par rapport à l'ensemble de la gomme à mâcher.

23. Gomme à mâcher selon l'une quelconque des revendications 1 à 22, dans laquelle le mélange d'élastomères contient au moins trois élastomeres.

24. Gomme à mâcher selon l'une quelconque des revendications 1 à 14, molle dès le départ, comprenant une base de gomme, un arôme et un édulcorant ; ladite base de gomme comprenant de 5 à 40 % en poids d'au moins deux émollients, ladite gomme à mâcher ayant une rigidité Taber et une valeur Instron inférieures d'au moins 5 % à celles d'une gomme comparable contenant une cire, ladite gomme à mâcher comprenant, en outre, au moins un liant choisi parmi le sirop de maïs, un hydrolysat d'amidon hydrogéné, la lycasine coévaporée, ou des mélanges de ceux-ci.

25. Gomme à mâcher sans cire à durcissement rapide selon l'une quelconque des revendications 1 à 14, initialement molle, comme cela est mesuré par une rigidité Taber de 15 à 55 et dont la rigidité Taber est inférieure d'au moins 5 % à celle d'une gomme comparable contenant une cire, ladite gomme à mâcher comprenant, en outre, une base de gomme comprenant :
| Ingrédient | % en poids par rapport à la base de gomme |
|---|---|
| au moins deux élastomères synthétiques | de 20 à 60 |
| au moins un plastifiant d'élastomère | de 5 à 55 |
| au moins une charge | de 4 à 40 |
| au moins un émollient | de 5 à 40. |

26. Gomme à mâcher selon l'une quelconque des revendications 1 à 25, ladite gomme adhérant faiblement à la surface des dents.

27. Gomme à mâcher selon l'une quelconque des revendications 1 à 26, ladite gomme ayant la forme d'un granule enrobé ou d'une bille.

28. Gomme à mâcher selon l'une quelconque des revendications 1 à 27, ladite gomme étant une gomme à faire des bulles ("*bubble gum*").

29. Gomme à mâcher selon l'une quelconque des revendications 1 à 28, ladite gomme étant sans sucre.

30. Gomme à mâcher selon l'une quelconque des revendications 1 à 29, dans laquelle la partie charge soluble dans l'eau comprend, en outre, des édulcorants choisis dans le groupe constitué par les édulcorants de faible intensité, les édulcorants d'intensité élevée, et les mélanges de ceux-ci.
